# EUROPEAN PATENT SPECIFICATION

(11) **EP 2 327 544 B1**
(45) Date of publication and mention of the grant of the patent: **04.07.2018**
(21) Application number: 09814573.3
(22) Date of filing: 15.09.2009
(51) Int. Cl.: B32B 25/20, C08J 5/12, C09J 5/00, C09J 5/02, C09J 183/04

(54) **BONDED OBJECT OF THREE-DIMENSIONAL SILICONE RUBBER**
GEBUNDENES OBJEKT AUF DREIDIMENSIONALEM SILIKONKAUTSCHUK
OBJET LIÉ EN CAOUTCHOUC DE SILICONE TRIDIMENSIONNEL

(30) Priority: 16.09.2008 JP 2008236541
(43) Date of publication of application: 01.06.2011
(73) Proprietor: Asahi Rubber Inc., Saitama-shi, Saitama 330-0801 (JP); Sulfur Chemical Institute Incorporated, Iwate 020-0066 (JP)
(72) Inventor: MORI, Kunio, Morioka-shi Iwate 020-0034 (JP); TAKAGI, Kazuhisa, Saitama-shi Saitama 330-0801 (JP)
(74) Representative: dompatent von Kreisler Selting Werner - Partnerschaft von Patent- und Rechtsanwälten mbB
(86) International application number: PCT/JP2009/066098
(87) International publication number: WO 2010/032728

(56) References cited:
- JP-A- 62 001 538
- JP-A- 62 001 538
- JP-A- 2008 156 592
- JP-A- 2008 156 592
- JP-T- 10 500 637
- JP-T- 2002 524 597
- US-B1- 6 234 335
- US-B1- 6 290 892
- US-B1- 6 299 596

## Description

### Technical Field

The present invention relates to a silicone-rubber bonded object which is manufactured by bonding a non-flowable elastic substrate made of a three-dimensional silicone rubber and an adherend substrate together without using flowable material such as adhesives.

### Background of the Invention

Physicochemical properties of a non-flowable, flexible and elastic substrate made of a three-dimensional silicone rubber is largely different from that of an adherend substrate made of material such as metal, ceramics, resin, crosslinked rubber etc. Both of them have no adhesiveness and stickiness between them, so that adhesion or sticking cannot be observed when both materials are merely contacted to each other. Even if they are contacted to each other using an adhesive agent, its bonding force is very weak because bonding thereof is generated only by intermolecular forces. When another material is used as the substrate, the adhesive agent should also be replaced with another appropriate one, and the selection of the adhesive agent should be done through a trial and error process, accordingly it takes a lot of time, being inconvenient.

To form stable adhesion joints between these substrates using an adhesive agent, wettability of the substrate with the adhesive agent is the most important factor. Therefore, a liquid adhesive agent has been so far used between the substrates, and they are abutted against each other. Then the adhesive agent is cured to complete the adhesion process.

When these liquid adhesive agents are used, there occurs a problem in which the adhesive agent flows out from an end portion of the substrates to be bonded, and strict quality specifications of the thickness and the bonding strength of an adhesive layer cannot be guaranteed. Such problem may cause a lot of fatally defective products in producing precise equipment products that require microfabrication. The yield rate in the production of precision equipments is deteriorated. Furthermore, due to a lot-to-lot variation in unevenness of the surface of each substrate, homogenization in an adhesion process becomes difficult. Percentage of the defective products and productivity for the final product depend largely on the amount of experience and the level of capability of workers in charge of production lines, so that it is difficult to produce high quality final products in high quantity and at high yield rate.

When the non-flowable substrates are adhered to each other using a double-faced adhesive tape having pressure-sensitive adhesive agent, the amount of the pressure-sensitive adhesive agent that flows out of the end of the substrates and/or the thickness of the pressure-sensitive adhesive agent can be easily controlled, but the adhesion between the substrate and the pressure-sensitive adhesive agent tends to be spoiled far more easily at a high temperature or a high humidity environment than the adhesion using an adhesive agent, because pressure sensitive adhesion is based on a comparatively weak intermolecular force.

There has been so far almost no attempt to bond a three-dimensional silicone rubber elastic substrate and an adherend substrate together by forming chemical bonds without using an adhesive agent or a pressure-sensitive adhesive agent.

Japanese Unexamined Patent Application Publication 08-183864 discloses a method to produce an integral-molded object comprising a resin-molded body made of acrylonitrile-butadiene-styrene polymer (ABS) and a three-dimensional silicone rubber without using an adhesive agent or a pressure-sensitive adhesive agent. A portion of the molded object made of ABS resin, which should be adhered, is treated beforehand with irradiation of ultraviolet light, and then an addition reaction curing type liquid silicone rubber is applied to the molded object and finally they are cured to obtain an integrally bonded object. However, this method has a similar problem as seen in a case where adhesives are used, because molded non-flowable substrates are not directly adhered to each other.

US 6,299,596 B1 **discloses a method of bonding polymeric materials. The method involves surface treating the surface of a polymeric material such that bondability of the material is enhanced.**

US 6,234,335 B1 **discloses a sealing element for sealing a container. The cap has a top with an opening in combination with a septum. The cap may be made of plastic.**

JP 2008-156592 A **and** JP 62001538 A **disclose a silicone rubber substrate phasma treated and bonded to adherend substrate.**

US6,290,892 B2 **provides for a process for preparing a laminated composite of an addition type silicone rubber and a polyurethane in which the components are mixed and cured in a mold.**

### Summary of the Invention

The present invention was developed to solve the problems described above. An object of the present invention is to provide a silicone-rubber bonded object, in which non-flowable substrates such as a molded three-dimensional silicone rubber elastic substrate and a molded adherend substrate, are tenaciously bonded to each other in an inexpensive and simple manner and at high productivity without using liquid curable adhesive agents or pressure-sensitive adhesive agents. And other object of the present invention is to provide a simple method for manufacturing the silicone-rubber bonded object.

The silicon-rubber bonded object developed to achieve the objects described above comprises;
a three-dimensional silicone rubber elastic substrate having hydroxyl groups on a surface thereof laminated with an adherend substrate having hydroxyl groups on a surface thereof,
   **and the substrates being connected to each other through covalent bonds between the hydroxyl groups of both,**
   **wherein the hydroxyl groups of the elastic substrate and the hydroxyl groups of the adherend substrate are combined by the covalent bonds through a reactive-group containing polysiloxane that is connected to both of the hydroxyl groups of the elastic substrate and the adherend substrate, and**
   **the reactive-group containing polysiloxane preliminarily-bonded to the hydroxyl group of the three-dimensional silicone rubber elastic substrate is chemically bonded to the hydroxyl group of the adherend substrate by the covalent bonds, and the reactive-group containing polysiloxane comprises;**
**p repeating unit or units of -{O-Si(-A1)(-B1)}-,**
**q repeating units of -{O-Ti(-A2)(-B2)}-, and**
**r repeating unit or units of -{O-Al(-A3)}-** :
   **wherein in each repeating unit, p is the number of 0 or 2 to 200, q is the number of 2 to 200, r is the number of 0 or 2 to 100, and p+q+r>2; each of -A1, -A2 and -A3 is either one of a group of -CH3, -C2H5, -CH=CH2, -CH(CH3)2, -CH2CH(CH3)2, -C(CH3)3, -C6H5 or -C6H12, or a reactive group for forming the covalent bond being selected from the group consisting of -OCH3, -OC2H5, -OCH=CH2, -OCH(CH3)2, -OCH2CH(CH3)2, -OC(CH3)3, -OC6H5 and -OC6H12; each of -B1 and -B2 is either one of a group of -N(CH3)COCH3 or -N(C2H5) COCH3, or a reactive group for forming the covalent bond being selected from the group consisting of -OCH3, -OC2H5, -OCH=CH2, -OCH(CH3)2, -OCH2CH(CH3)2, -OC(CH3)3, -OC6H5, -OC6H12, -OCOCH3, -OCOCH(C2H5)C4H9, -OCOC6H5, -ON=C(CH3)2 and -OC(CH3)=CH2; and at least one of the -A1, -A2, -A3, -B1 and -B2 in the repeating units having positive number of p, q or r is the reactive group,**
**and the hydroxyl groups are formed on the surfaces by a corona discharge treatment and/or a plasma treatment over the elastic substrate and/or the adherend substrate.**

In the silicon-rubber bonded object, the hydroxyl groups on the elastic substrate or the hydroxyl groups on the adherend substrate may be formed by de-blocking.

In the silicon-rubber bonded object, the adherend substrate may be made of metal, resin, ceramics, or crosslinked rubber.

In the silicon-rubber bonded object, the hydroxyl groups of the elastic substrate and the hydroxyl groups of the adherend substrate **are** combined by the covalent bonds through polysiloxane that is connected to both of the hydroxyl groups of the elastic substrate and the adherend substrate.

In the silicon-rubber bonded object, the polysiloxane comprise**s**;
p repeating unit or units of -{O-Si(-A¹)(-B¹)}-,
q repeating unit or units of -{O-Ti(-A²)(-B²)}-, and
r repeating unit or units of -{O-Al(-A³)}- :
wherein in each repeating unit, p and q each is the number of 0 or 2 to 200, r is the number of 0 or 2 to 100, and p+q+r>2; each of -A¹, -A² and -A³ is either one of a group of -CH₃, -C₂H₅, -CH=CH₂, -CH(CH₃)₂, -CH₂CH(CH₃)₂, -C(CH₃)₃, -C₆H₅ or -C₆H₁₂, or a reactive group for forming the covalent bond being selected from the group consisting of -OCH₃, -OC₂H₅, -OCH=CH₂, -OCH(CH₃)₂, -OCH₂CH(CH₃)₂, -OC(CH₃)₃, -OC₆H₅ and -OC₆H₁₂; each of -B¹ and -B² is either one of a group of -N(CH₃)COCH₃ or -N(C₂H₅) COCH₃, or a reactive group for forming the covalent bond being selected from the group consisting of -OCH₃, -OC₂H₅, -OCH=CH₂, -OCH(CH₃)₂, -OCH₂CH(CH₃)₂, -OC(CH₃)₃, -OC₆H₅, -OC₆H₁₂, -OCOCH₃, -OCOCH(C₂H₅)C₄H₉, -OCOC₆H₅, -ON=C(CH₃)₂ and -OC(CH₃)=CH₂; and at least one of the -A¹, -A², -A³, -B¹ and -B² in the repeating units having positive number of p, q or r is the reactive group.

In the silicon-rubber bonded object, on both surfaces of the elastic substrate, the adherend substrates may be each bonded.

In the silicon-rubber bonded object, each of the adherend substrates may be made of the same or a different kind of the material.

In the silicone-rubber bonded object, a plurality of pairs of the elastic substrate and the adherend substrate may be laminated.

A method for producing a silicone-rubber bonded object comprises;
a lamination step for laminating a three-dimensional silicone rubber elastic substrate having hydroxyl groups on a surface thereof with an adherend substrate having hydroxyl groups on a surface thereof; and
a bond step for bonding the substrates to each other through a covalent bond formed between the hydroxyl groups of both at 0 to 200°C and under a load treatment or a reduced pressure treatment.

The method for manufacturing a silicone-rubber bonded object further may comprise;
a treatment step for performing a corona discharge treatment and/or a plasma treatment of the surface of the elastic substrate and/or the surface of the adherend substrate to generate the hydroxyl groups; and then performing the lamination.

The method for manufacturing a silicon-rubber bonded object may further comprise;
an apply step for applying polysiloxane, which is to be combined to both the hydroxyl groups of the elastic substrate and the hydroxyl groups of the adherend substrate, on the elastic substrate or the adherend substrate which is subjected to either of the treatments, and then performing the lamination step.

The silicone-rubber bonded object of the present invention has an inexpensive and simple structure in which an elastic substrate made of a three-dimensional silicone rubber is tenaciously bonded to an adherend substrate made of, such as metal, resin, ceramics, crosslinked rubber etc. by chemical covalent bonds without using a curable adhesive agent or a pressure-sensitive adhesive agent.

On the surface of the three-dimensional silicone rubber elastic substrate, organic groups that are combined to Si is changed into highly reactive hydroxyl groups by a corona discharge treatment or a plasma treatment and then is reacted with hydroxyl groups or hydrolysable groups on a surface of the adherend substrate, generating ether bonds which contribute to adhesion. The three-dimensional silicone rubber elastic substrate is a crosslinked-network three-dimensional elastic silicone rubber having various shapes such as a sheet, plane-like board, complicated three-dimensional shape etc. and it has an entropic elasticity so that even if the adherend substrate is non-flowable material, the surface roughness of the adherend substrate is compensated by this entropic elasticity, and accordingly they are closely attached to each other and then bonded.

According to the method for manufacturing the silicone-rubber bonded object, productivity can be improved, and bulk production can be simply achieved.

Presence of the hydroxyl groups on both adherend surfaces of the three-dimensional silicone rubber elastic substrate and the adherend substrate; and sufficient closeness between both hydroxyl groups; cause the generation of the covalent bonds through the chemical reaction between the hydroxyl groups of both substrates, giving the silicone-rubber bonded object a tenacious adhesion.

Thus tenacious adhesion is achieved between the non-flowable silicone rubber elastic substrate which is the three-dimensional entropic elastic object and the non-flowable adherend substrate without using any adhesive agent or any pressure-sensitive adhesive agent. An bonded object having a plurality of substrates can be manufactured if needed.

### Brief Description of the Drawing

Fig. 1 is a schematic cross-sectional view showing a silicone-rubber bonded object of the present invention in production process.
Fig. 2 is a schematic cross-sectional view showing another silicone-rubber bonded object of the present invention.
Fig. 3 is a schematic cross-sectional view showing still another silicone-rubber bonded object of the present invention.
Fig. 4 is a schematic cross-sectional view showing yet another silicone-rubber bonded object of the present invention.
Fig. 5 is a schematic cross-sectional view showing another silicone-rubber bonded object of the present invention.

### Explanation of Numerals

Numerals mean as follows. 1: silicone-rubber bonded object, 10 : functional silane compound layer, 11a. 11b. 11c: three-dimensional silicone rubber elastic substrate, 12a. 12b. 12c. 13a. 13b. 13c: adherend substrate.

The present invention will be explained below in detail but the scope of the present invention is not intended to be limited to these embodiments.

One embodiment of the present silicone-rubber bonded object will be explained with reference to Fig. 1 which corresponds to Examples.

The silicone-rubber bonded object 1 comprises: an elastic substrate 11a made of a three-dimensional silicone rubber; and an adherend substrate 12a made of metal that abuts against the elastic substrate, and then they are bonded. An adherend surface of the three-dimensional silicone rubber elastic substrate 11a is beforehand subjected to a corona discharge treatment or a plasma treatment, and an adherend surface of the adherend substrate 12a made of the metal is also beforehand subjected to a corona discharge treatment, a plasma treatment or a UV irradiation treatment. On these adherend surfaces, hydroxyl groups are respectively generated and exposed to the air. When both substrates 11a, 12a abut against each other, the hydroxyl groups of both are chemically bonded to form ether groups through dehydration reaction.

The three-dimensional silicone rubber elastic substrate 11a may be a plane-like sheet, film, board, three-dimensional molded article etc. The adherend substrate 12a may be a plane-like sheet, film, board, three-dimensional molded article etc. as far as the adherend substrate can abut against the three-dimensional silicone rubber elastic substrate 11a. There may be small clearance gaps caused by a surface roughness between the adherend substrate 12a and the three-dimensional silicone rubber elastic substrate 11a initially. The adhered surface of the elastic substrate 11a can expand and contract in some degree due to its elasticity, so that the ether bonding can be surely formed to achieve close contacts and tenacious adhesions between the adherend substrate 12a and the elastic substrate 11a.

In Fig. 1, the adherend substrate 12a made of metal is shown as one example, but it can be made of resin, ceramics, a same or different kind of three-dimensional silicone rubber, uncrosslinked silicone rubber or conventional crosslinked rubber.

The silicone-rubber bonded object 1 can be formed by bonding the adherend substrate to each surface of the plate-like three-dimensional silicone rubber elastic substrate 11a. In such cases, the upper and lower side adherend substrates 12a, 13a on the three-dimensional elastic crosslinked silicone rubber substrate 11a can be formed using the same material, but as shown in Fig. 2, other materials can also be used. For example, the upper-side adherend substrate 12a can be formed using a non-silicone material, such as metal, resin, ceramics, glass etc. and the lower-side adherend substrate 13a can be formed using another material, such as metal, resin, ceramics, glass, rubber material such as a three-dimensional silicone rubber, crosslinked rubber etc. The reverse order can be adopted.

As shown in Fig. 3, the silicone-rubber bonded object 1 can be comprised of three-dimensional silicone rubber elastic substrates 11a, 11b; and adherend substrates 12a, 12b, 12c made of a material such as metal, resin, ceramics, glass etc., or a same material selected from a rubber such as a three-dimensional crosslinked silicone rubber, crosslinked rubber etc. These substrates can be alternately multilayered to form a laminate.

As shown in Figs. 4 and 5, the silicone-rubber bonded object 1 can comprise: three-dimensional silicone rubber elastic substrates 11a, 11b, 11c; and adherend substrates made of a different material, more particularly, adherend substrates 12a, 12b made of, for example, metal, resin, ceramics, glass; and other adherend substrates 13a, 13b made of an uncrosslinked silicone rubber, a three-dimensional silicone rubber, or crosslinked rubber. These substrates may be alternately multilayered to form a laminate.

The three-dimensional silicone rubber elastic substrate is a three-dimensional elastic silicone object mainly made of silicone rubber such as, particularly, a peroxide crosslinking type silicone rubber, an addition crosslinking type silicone rubber, a condensation crosslinking type silicone rubber, or a blended rubber of such silicone rubber mentioned above with an olefin rubber. These rubbers and/or the blended rubbers are each molded in a mold and crosslinked to manufacture the three-dimensional silicone rubber elastic substrate.

The peroxide crosslinking type silicone rubber, which is a raw material for the three-dimensional silicone rubber elastic substrate, is not specifically limited as far as the rubber is synthesized from a silicone raw compound and can be crosslinked by a peroxide type crosslinking agent. Particularly, polydimethylsiloxane (molecular weight: 500,000 to 900,000), vinylmethylsiloxane/polydimethylsiloxane copolymer (molecular weight: 500,000 to 900,000), vinyl-terminated polydimethylsiloxane (molecular weight: 10,000 to 200,000), vinyl-terminated diphenylsiloxane/polydimethylsiloxane copolymer (molecular weight: 10,000 to 100,000), vinyl-terminated diethylsiloxane/polydimethylsiloxane copolymer (molecular weight: 10,000 to 50,000), vinyl-terminated trifluoropropylmethylsiloxane/polydimethylsiloxane copolymer (molecular weight: 10,000 to 100,000), vinyl-terminated polyphenylmethylsiloxane (molecular weight: 1,000 to 10,000), vinylmethylsiloxane/dimethylsiloxane copolymer, trimethylsiloxane group-terminated dimethylsiloxane/vinylmethylsiloxane copolymer, trimethylsiloxane group-terminated dimethylsiloxane/vinylmethylsiloxane/diphenylsiloxane copolymer, trimethylsiloxane group-terminated dimethylsiloxane/vinylmethylsiloxane/ditrifluoropropylmethylsilo xane copolymer, trimethylsiloxane group-terminated polyvinylmethylsyloxane, methacryloxypropyl group-terminated polydimethylsiloxane, acryloxypropyl group-terminated polydimethylsiloxane, (methacryloxypropyl)methylsiloxane/dimethylsiloxane copolymer, (acryloxypropyl)methylsiloxane/dimethylsiloxane copolymer can be exemplified.

As the peroxide type crosslinking agent, for example, ketone peroxides, diacyl peroxides, hydroperoxides, dialkylperoxides, peroxyketals, alkylperesters, percarbonates can be exemplified. More particularly, ketoneperoxide, peroxyketal, hydroperoxide, dialkylperoxide, peroxycarbonate, peroxyester, benzoylperoxide, dicumylperoxide, dibenzoylperoxide, t-butylhydroperoxide, di-t-butylhydroperoxide, di(dicyclobenzoyl)peroxide, 2,5-dimethyl-2,5bis(t-butylperoxy)hexane, 2,5-dimethyl-2,5-bis(t-butylperoxy)hexyne, benzophenone, Michler's ketone, dimethylaminobenzoic acid ethyl ester, benzoin ethyl ether can be exemplified.

The amount to be used as the peroxide type crosslinking agent can be arbitrarily determined depending on the kind of the silicone rubber to be used, and properties and performance of the adherend substrate to be bonded to the elastic substrate which is molded from the silicone rubber. However, as the peroxide type crosslinking agent, 0.01 to 10, more preferably 0.1 to 2 parts by weight based on 100 parts by weight of silicone rubber can be preferably used. If the amount is less than this range, crosslink density becomes too low to give desired properties as a silicone rubber. On the contrary, if the amount is more than this range, crosslink density becomes too high, so that desired elasticity cannot be obtained.

The addition type silicone rubber which is a raw material for the three-dimensional silicone rubber elastic substrate can be obtained by synthesis in the presence of Pt catalyst using below composition. The composition comprises vinyl group containing polysiloxanes such as vinylmethylsiloxane/polydimethylsiloxane copolymer (molecular weight: 500,000 to 900,000), vinyl-terminated polydimethylsiloxane (molecular weight: 10,000 to 200,000), vinyl-terminated diphenylsiloxane/polydimethylsiloxane copolymer (molecular weight: 10,000 to 100,000), vinyl-terminated diethylsiloxane/polydimethylsiloxane copolymer (molecular weight: 10,000 to 50,000), vinyl-terminated trifluoropropylmethylsiloxane/polydimethylsiloxane copolymer (molecular weight: 10,000 to 100,000), vinyl terminated polyphenylmethylsiloxane (molecular weight: 1000 to 10,000), vinylmethylsiloxane/dimethylsiloxane copolymer, trimethylsiloxane group-terminated dimethylsiloxane/vinylmethylsiloxane/diphenylsiloxane copolymer, trimethylsiloxane group-terminated dimethylsiloxane/ vinylmethylsiloxane/ditrifluoropropylmethylsiloxane copolymer, trimethylsiloxane group-terminated polyvinylmethylsiloxane etc.; and H group-containing polysiloxanes such as H-terminated polysiloxane (molecular weight: 500 to 100,000), methyl H siloxane/dimethylsiloxane copolymer, polymethyl H siloxane, polyethyl H siloxane, H-terminated polyphenyl(dimethyl H siloxy)siloxane, methyl H siloxane/phenylmethylsiloxane copolymer, methyl H siloxane/octylmethylsiloxane copolymer etc.

The other composition comprises amino group-containing polysiloxanes such as aminopropyl-terminated polydimethylsiloxane, aminopropylmethylsiloxane/dimethylsiloxane copolymer, aminoethylaminoisobutylmethylsiloxane/dimethylsiloxane copolymer, aminoethylaminopropylmethoxysiloxane/dimethylsiloxane copolymer, dimethylamino-terminated polydimethylsiloxane; and epoxy group-containing polysiloxanes such as epoxypropyl-terminated polydimethylsiloxane, (epoxycyclohexylethyl)methylsiloxane/dimethylsiloxane copolymer, acid anhydride group-containing polysiloxanes such as succinic acid anhydride-terminated polydimethylsiloxane, or isocyanato group-containing compounds such as toluyldiisocyanate, 1,6-hexamethylene diisocyanate.

Processing conditions to prepare the addition type silicone rubbers from these compositions cannot be determined unambiguously because the processing conditions vary with the kinds and characteristics of addition reactions, but generally the preparation can be carried out at 0 to 200°C for 1min. to 24 hours. Under these conditions, the addition type silicone rubber can be obtained as the three-dimensional silicone rubber elastic substrate. In cases where preparation is carried out at a low temperature to obtain a silicone rubber having good physical properties, the reaction time should be lengthened. In cases where productivity is more emphasized rather than the physical properties, the preparation should be carried out at a higher temperature for a shorter period of time. If the preparation should be carried out within a certain period of time in compliance with the production processes or working conditions, the preparation should be carried out at a comparatively higher temperature to meet a desired period of processing time.

The condensation type silicone rubber material for the three-dimensional silicone rubber elastic substrate can be obtained by synthesis in the presence of Tin catalyst using below composition. The composition is exemplified by a composition of a homocondensation component consisting of silanol group-terminated polysiloxanes such as silanol-terminated polydimethyl siloxane (molecular weight: 500 to 200,000), silanol-terminated polydiphenylsiloxane, silanol-terminated polytrifluoromethylsiloxan, silanol-terminated diphenyl siloxane/dimethylsiloxane copolymer etc.; another composition consisting of these silanol group-terminated polysiloxanes and crosslinking agents such as tetraacetoxysilane, triacetoxymethylsilane, di t-butoxydiacetoxysilane, vinyltriacetoxysilane, tetraethoxysilane, triethoxymethylsilane, bis(triethoxysilyl)ethane, tetra-n-propoxysilane, vinyltrimethoxysilane, methyltris(methylethylketoxim)silane, vinyltris(methylethylketoximino)silane, vinyltriisopropenoxysilane, triacetoxymethylsilane, tri(ethylmethyl)oximmethylsilane, bis(N-methylbenzoamido)ethoxymethylsilane, tris(cyclohexylamino)methylsilane, triacetoamidomethylsilane, tridimethylamino methylsilane; or another composition consisting of these silanol group-terminated polysiloxanes and terminal blocked polysiloxanes such as chloro-terminated polydimethylsiloxane, diacetoxymethyl-terminated polydimethylsiloxane, terminal-blocked polysiloxane.

Processing conditions to prepare the condensation type silicone rubbers from these compositions cannot be determined unambiguously because the processing conditions vary with the kinds and characteristics of condensation reactions, but generally the preparation can be carried out at 0 to 100°C for 10min. to 24 hours. Under these conditions, the condensation type silicone rubbers can be obtained as the three-dimensional silicone rubber elastic substrate. In cases where the preparation is carried out at a low temperature to obtain a silicone rubber having good physical properties, the reaction time should be lengthened. In cases where productivity is more emphasized rather than the physical properties, the preparation should be carried out at a higher temperature for a shorter period of time. If the preparation should be carried out within a certain period of time in compliance with production processes or working conditions, the preparation should be carried out at a comparatively higher temperature to meet a desired period of processing time.

The blended rubber material for the three-dimensional silicone rubber elastic substrate comprises the silicone rubber with the olefin rubber. As the olefin rubber, 1, 4-cis-butadiene rubber, isoprene rubber, styrene-butadiene copolymer rubber, polybutene rubber, polyisobutylene rubber, ethylene-propylene rubber, ethylene-propylene-diene rubber, chlorinated ethylene-propylene rubber, chlorinated butyl rubber can be exemplified.

To the three-dimensional silicone rubber elastic substrate, a functional additive can be added to enhance its functions such as reinforcement for the silicone rubber elastic substrate, electro conductivity, thermal conductivity, abrasion resistance, ultra violet resistance, radiation resistance, heat resistance, weatherability, flexibility, etc. If required, a functional filler can be added as a bulking agent.

For example, as a reinforcing agent, various grades of carbon black such as HAF, FEF etc., Aerosil, dry silica, wet silica, precipitated silica, Nipsil, talc, calcium silicate, calcium carbonate, carbon fiber, Kevlar fiber, polyester fiber, glass fiber etc. can be exemplified.

As an electrical conductive agent, carbon black, gold powder, silver powder, nickel powder etc., and surface-coating metal oxide powder coated with thus metal, ceramics powder, organic powder, organic fiber etc. can be exemplified.

As a thermally-conductive agent, powder or fiber such as Al₂O₃, AIN, Si₃N₄, C₃N₄, SiC, graphite etc. can be exemplified.

These functional additives and fillers are added arbitrarily, for example, in a range of 1 to 400, preferably 20 to 300 parts by weight based on 100 parts by weight of the three-dimensional silicone rubber depending on the kinds and properties of the three-dimensional silicone rubber elastic substrate and in compliance with the intended use and performance of the silicone-rubber bonded object. If added amount is less than this range, each function of the functional additives and functional fillers is not demonstrated. On the other hand, if the amount of the additives or the fillers is more than this range, rubber elasticity is lost.

As a material for the adherend substrate, metal and metal products, resin and resin products, ceramics and ceramics products, crosslinked rubber and crosslinked rubber products etc. can be exemplified. The material of the adherend substrate can be a three-dimensional silicone rubber or an uncrosslinked silicone rubber.

As the metal which is the material for the adherend substrate, for example, a metal such as gold, silver, copper, iron, cobalt, silicon, lead, manganese, tungsten, tantalum, platinum, cadmium, tin, palladium, nickel, chrome, titanium, zinc, aluminum, magnesium and a binary-, ternary- and multi-component metal alloys comprising of those metals can be exemplified. The adherend substrate made of the metal can be a product formed into a powder, fiber, wire, rod, mesh, board, film or a combination of them.

As the ceramics which is the material for the adherend substrate, oxides, nitrides and carbides of metal such as silver, copper, iron, cobalt, silicon, lead, manganese, tungsten, tantalum, platinum, cadmium, tin, palladium, nickel, chrome, indium, titanium, zinc, calcium, barium, aluminum, magnesium, sodium and potassium, and their simple substances and their composites can be exemplified. The adherend substrate made of the ceramics can be a product formed into a powder, fiber, wire, rod, mesh, board, film or a combination of them.

As a resin which is the material for the adherend substrate, polymers such as cellulose and its derivatives, hydroxyethyl cellulose, starch, diacetylcellulose, surface-saponified vinylacetate resin, low-density polyethylene, high-density polyethylene, i-polypropylene, petroleum resin, polystyrene, s-polystyrene, chromane-indene resin, terpene resin, styrene-divinylbenzene copolymer, ABS resin, polymethyl acrylate, polyethyl acrylate, polyacrylonitrile, polymethyl methacrylate, polyethyl methacrylate, polycyanoacrylate, polyvinyl acetate, polyvinyl alcohol, polyvinylformal, polyvinylacetal, polyvinyl chloride, vinyl chloride-vinyl acetate copolymer, vinyl chloride-ethylene copolymer, polyvinylidene fluoride, vinylidene fluoride-ethylene copolymer, vinylidene fluoride-propylene copolymer, 1,4-trans-polybutadiene, polyoxymethylene, polyethylene glycol, polypropylene glycol, phenol-formalin resin, cresol-formalin resin, resorcin resin, melamine resin, xylene resin, toluene resin, glyptal resin, modified glyptal resin, polyethylene terephthalate, polybutylene terephthalate, unsaturated polyester resin, allylester resin, polycarbonate, 6-nylon, 6,6-nylon, 6,10-nylon, polyimide, polyamide, polybenzimidazole, polyamideimide, silicone, silicone rubber, silicone resin, furan resin, polyurethane resin, epoxy resin, polyphenyleneoxide, polydimethylphenyleneoxide, a mixture of triallyisocyanur compound with polyphenyleneoxide or polydimethylphenyleneoxide, a mixture of [polyphenyleneoxide or polydimethylphenyleneoxide, triallyl isocyanur, peroxide], polyxylene, polyphenylenesulfide (PPS), polysulfone (PSF), polyethersulfone (PES), polyether ether ketone (PEEK), polyimide (PPI, Kapton), polytetrafluroethylene (PTFE), liquid crystal resin, Kevlar fiber, carbon fiber, a mixture of a plurality of these resins, and crosslinked products of these polymers can be exemplified. The adherend substrate made of the resin can be a product formed into a film, board and a three-dimensional molded article having a curved surface and products of them.

As the crosslinked rubber vulcanized which is the material for the adherend substrate, for example, a crosslinked material made of a composition comprising a linear elastic rubber-like raw material such as a linear polymer illustrated by natural rubber, 1,4-cis butadiene rubber, isoprene rubber, polychloroprene, styrene-butadiene copolymer rubber, hydrogenated styrene-butadiene copolymer rubber, acrylonitrile-butadiene copolymer rubber, hydrogenated acrylonitrile-butadiene copolymer rubber, polybutene rubber, polyisobutylene rubber, ethylene-propylene rubber, ethylene-propylene-diene rubber, ethylene oxide-epichlorohydrin copolymer rubber, chlorinated polyethylene rubber, chlorosulfonated polyethylene rubber, alkylated chlorosulfonated-polyethylene rubber, chloroprene rubber, chlorinated acryl rubber, brominated acryl rubber, fluoro rubber, epichlorohydrin rubber and its copolymer rubber, chlorinated ethylene propylene rubber, chlorinated butyl rubber, brominated butyl rubber, homopolymer rubber or two- or three-dimensional co- or ter- polymer rubber using such a monomer as tetrafluoroethylene, hexafluoropropylene, vinylidene fluoride and tetrafluoroethylene, ethylene/tetrafluoroethylene copolymer rubber, propylene/tetrafluoroethylene copolymer rubber, ethylene-acryl rubber, peroxide type silicone rubber, addition reaction type silicone rubber, condensation type silicone rubber, epoxy rubber, urethane rubber, elastomer whose both ends are terminated with two unsaturated groups, etc. can be exemplified. The adherend substrate made of a crosslinked rubber is produced by vulcanizing the composition including the material mentioned above.

The adherend substrate made of the crosslinked rubber vulcanized can be preferably produced by adding filler, a vulcanizing agent, vulcanization accelerator, metallic activator, softener, stabilizer etc. into the rubber-like material mentioned above and then by molding, vulcanizing or bonding.

To vulcanize such linear polymer rubber, the vulcanization accelerator is added. For example, sulfur vulcanizing agents, triazinedithiol crosslinking agents, resin crosslinking agents, polyol crosslinking agents, peroxide crosslinking agents and chloroplatinic acid are added solely or in combination thereof as a crosslinking agent.

As the crosslinking agent, for example, sulfenamide type vulcanizing accelerators, thiuram type crosslinking accelerators, thiazole type crosslinking accelerators, amine type crosslinking accelerators, polyfunctional monomers can be exemplified. These crosslinking agents control the crosslinking speed of rubber and also enhance the physical strength of rubber. As the peroxide crosslinking agent, keton peroxide, peroxy ketal, hydroperoxide, dialkyl peroxide, peroxycarbonade, peroxyester, benzoyl peroxide, dicumyl peroxide, t-butylhydro peroxide, azobisbutyronitrile, benzophenone, Michler's ketone, dimethylaminobenzoic acid ethylester, benzoin ethyl ether etc. can be exemplified.

The amount of the crosslinking agent to be added is determined arbitrarily depending on the kind and properties of the crosslinked rubber vulcanized or the intended use and performance of the silicone-rubber bonded object. However, as the crosslinking agent, 0.1 to 10, preferably 0.5 to 5 parts by weight based on the 100 parts by weight of the crosslinked rubber vulcanized is added. If the amount is less than 0.1 parts by weight, the crosslinking density becomes too low to use it for obtaining the crosslinked rubber vulcanized. On the other hand, if the amount exceeds 10 parts by weight, the crosslinking density becomes too high, so that the crosslinked rubber vulcanized does no more show elasticity.

To crosslinked rubber vulcanized, fillers can be added to increase its strength or to increase its volume or weight. As the filler, for example, various grades of carbon black such as HAF, FEF etc., silica, Nipsil, talc, calcium silicate, calcium carbonate, carbon fiber, Kevlar fiber, polyester fiber, glass fiber etc. can be exemplified.

The amount of the filler to be added is determined arbitrarily depending on the intended use and performance of the silicone-rubber bonded object. However, as the filler, 1 to 400, preferably 20 to 300 parts by weight based on 100 parts by weight of the crosslinked rubber vulcanized is added. If the amount is less than 20 parts by weight, the volume increasing effect may be lowered. On the other hand, if the amount exceeds 100 parts by weight, the elasticity of the crosslinked rubber vulcanized is deteriorated.

At the time of preparing the crosslinked rubber vulcanized, a metallic compound can be added to the rubber-like raw materials to facilitate the crosslinking reaction. As the metallic compound, for example, zinc oxide, magnesium oxide, calcium oxide, barium oxide, aluminum oxide, calcium hydroxide, tin oxide, iron oxide, slaked lime, calcium carbonate, magnesium carbonate, sodium salt of fatty acid, calcium octilate, potassium iso-octilate, potassium butoxide, cesium octylate, potassium isostearate, etc. can be exemplified.

Such metallic compounds not only control the crosslinking speed but also neutralize a by-product halogen compound to effectively prevent molding machines, which are utilized to produce the crosslinked rubber vulcanized, from being damaged. To achieve this aim, the amount of metallic compound to be added in the crosslinked rubber vulcanized is 0.1 to 20, more preferably 0.5 to 10 parts by weight based on 100 parts by weight of the crosslinked rubber vulcanized. If the amount is less than 0.1 parts by weight, there is almost no effect on the control of crosslinking speed. On the other hand, if the amount is more than 20 parts by weight, no more improvement in the crosslinking-control effect is observed.

To improve the hardness and low-temperature resistance of the adherend substrate made of the crosslinked rubber vulcanized, a softener can be added. As the softener, for example, process oil, naphthenic oil, an ester of higher fatty acid, a dialkyl ester of phthalic acid can be exemplified.

The amount of the softener to be added is in the range of 1 to 100, preferably 5 to 50 parts by weight based on 100 parts by weight of the crosslinked rubber vulcanized, if the amount is less than 1 part by weight, softening effect becomes too low. On the other hand, if the amount is over 100 parts by weight, the softener tends to flow out of the rubber.

The adherend surfaces of the three-dimensional silicone rubber elastic substrate and the metallic adherend substrate are treated with a corona discharge or plasma treatment to produce hydroxyl groups, which is an essential procedure.

It is an well-known phenomena that a reactive group such as OH group, COOH group and C=O group is freshly generated on the surface of an organic material when irradiation of ultraviolet light, a corona discharge treatment or a plasma treatment is performed onto the organic material. However, the three-dimensional silicone rubber has an excellent resistance to the irradiation of ultraviolet light, so that generation of the reactive group such as OH group is hardly observed even if the irradiation of ultraviolet light was performed. However, when the three-dimensional silicone rubber is treated with the corona discharge treatment or the plasma treatment, generation of a large number of OH group are confirmed using X-ray photo electron spectroscopy (XPS) analysis. The XPS analysis shows that a significant increase in the concentration of SiOH (Si⁺³) component is observed on the surface of the three-dimensional silicone rubber.

The corona discharge treatment of the surface of the three-dimensional silicone rubber elastic substrate and/or the adherend substrate can be carried out beforehand, for example, using CoronaMaster (trade name, an apparatus for corona surface modification under an atmospheric pressure, produced by Shinko Electric & Instrumentation Co., Ltd.), under conditions of, power source: AC100V, gap length: 1 to 4mm, output voltage: 5 to 40kV (surface potential), electric power: 5 to 40W, oscillating frequency: 0 to 40kHz, for 0.1 to 60 seconds, temperature: 0 to 60°C, moving speed: 0.1 to 10m/min. and times of movement: 1 to 20 times.

Another corona discharge treatment using a corona flame jet system is carried out using, for example, CoronaFit (trade name, an apparatus for corona surface modification, produced by Shinko Electric & Instrumentation Co., Ltd.), under conditions of power source: AC 100V, gap length: 1 to 10cm, output voltage: 5 to 40kV (surface potential), electric power: 5 to 40W, oscillating frequency: 0 to 40kHz, for 0.1 to 60min. and temperature: 0 to 60°C.

These corona discharge treatments are generally carried out under, for example, an atomospheric envioronment of a relative humidity from 30 to 90% of air (nitrogen : oxygen=75.0 : 23.5 (weight ratio)), 100% nitrogen, 100% oxygen, air mixed argon or air mixed carbon dioxide.

The corona discharge treatments may be carried out under water-, alcohols-, aceton- or esters-wet conditions.

Plasma treatment of the surface of the three-dimensional elastic silicone substrate or the adherend substrate is carried out beforehand under the atmospheric pressure using, for example, Aiplasuma (plasma generator under atmospheric pressure, trade name, produced by Matsushita Electric Industrial Co., Ltd.) under conditions of plasma processing speed: 10 to 100 mm/s, power source: 200 or 220V, AC(30A), compressed air; 0.5MPa (1NL/min.), 10kHz/300W to 5GHz, electric power: 100 to 400W, irradiation period of time: 0.1 to 60 sec.

The surface of the adherend substrate may be irradiated with ultra violet light.

OH groups are generated on the surface of the three-dimensional silicone rubber elastic substrate and the adherend substrate by the atmospheric pressure corona discharge treatment or plasma treatment and, if needed, ultraviolet light treatment. These OH groups are classified into two types: an inorganic atom-bonding OH group which is directly connected to a metal atom, and an organosubstituent-bondable OH group which is directly connected to a carbon atom.

When the three-dimensional silicone rubber elastic substrate abuts against the adherend substrate, the inorganic atom-bonding OH group reacts relatively easily with another inorganic atom-bonding OH group or the organosubstituent-bondable OH group through dehydration reaction and directly forms an ether bond (-O-), to realize a relatively strong adhesion for both substrates. However, the organosubstituent-bondable OH groups are hardly reactive with each other, being difficult to form the ether bond directly and only resulting in just comparatively weak adhesion except that a special reaction condition is not adopted.

For example, the silicone rubber, which is used for the three-dimensional silicone rubber elastic substrate, generates the OH groups on its surface in sufficiently high concentration when it is subjected to the corona discharge treatment or plasma treatment. However, materials such as a resin which is a non-silicone rubber used for adherend substrate may not generate a sufficient concentration of OH groups even when they are treated with corona discharge treatment or plasma treatment.

To achieve adhesion through contact between the three-dimensional silicone rubber elastic substrate and the adherend substrate both of which are non-flowable materials, sufficient concentration of OH groups should be formed on both adherend surfaces of them or a concentration of a reactive group capable of reacting with the OH group on the other bonding surface should be amplified using the OH group generated in a small amount. Particularly, to cause a reaction between the organosubstituent-bondable OH groups, it is necessary to convert the organosubstituent-bondable OH groups on one side into inorganic atom-bonding OH groups or to introduce another reactive group which reacts with the organosubstituent-bondable OH groups on both substrates. For this purpose, a functional silane compound such as a silane coupling agent can be used.

As such functional silane compound, a polysiloxane having a reactive-group highly reactive with the OH group is exemplified. As shown in Fig. 1, the functional silane compound is introduced as a monomolecular layer 10.

As such reactive-group containing polysiloxane, a compound schematically represented by a below chemical formula (1) can be exemplified, 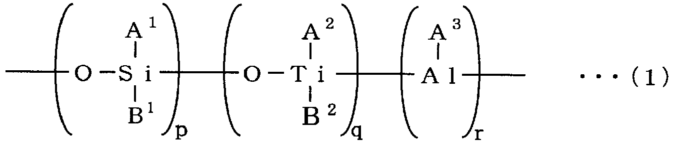 wherein in the formula (1), p and q are each the number of 0 or 2 to 200, r is the number of 0 or 2 to 100 and p + q + r > 2; each of -A¹, -A² and -A³ is either one substituent, which is selected from the group consisting of -CH₃, -C₂H₅, -CH=CH₂, -CH(CH₃)₂, -CH₂CH(CH₃)₂, -C(CH₃)₃ -C₆H₅ and -C₆H₁₂, or another substituent of a reactive group capable of reacting with OH group, which is selected from the group consisting of -OCH₃, -OC₂H₅, -OCH=CH₂, -OCH(CH₃)₂, -OCH₂CH(CH₃)₂, -OC(CH₃)₃, -OC₆H₅ and -OC₆H₁₂; each of -B¹ and -B² is either one substituent, which is selected from the group consisting of -N(CH₃)COCH₃ and -N(C₂H₅)COCH₃, or another substituent of a reactive group capable of reacting with a OH group, which is selected from the group consisting of -OCH₃ -OC₂H₅, -OCH=CH₂, -OCH(CH₃)₂, -OCH₂CH(CH₃)₂, -OC(CH₃)₃, -OC₆H₅, -OC₆H₁₂, -OCOCH₃, -OCOCH(C₂H₅)C₄H₉, -OCOC₆H₅, -ON=C(CH₃)₂ and -OC(CH₃)=CH₂; at least one of -A¹, -A², -A³, -B¹ and -B² in repeating units of -{O-Si(-A¹)(-B¹)ₚ-, -O-Ti(-A²)(-B²)}_{q}- or -{O-Al(-A³)}ᵣ- (p, q, r are positive numbers) is said reactive group capable of reacting with the OH group on the surface of the three-dimensional silicone rubber elastic substrate and the adherend substrate.

This compound can be produced by a block copolymerization or random copolymerization of the repeating units.

Into a solution of such polysiloxan having the reactive group capable of reacting with OH group, the three-dimensional silicone rubber elastic substrate and/or the adherend substrate, particularly, the adherent substrate made of non-silicone rubber such as metal, resin, ceramics, glass or crosslinked rubber is immersed and then heat treated. To the OH group on the substrate surface, the reactive-group containing polysiloxane is bonded to form a monomolecular layer. Therefore, reactive-groups capable of with the OH group on the other side are amplified. When the three-dimensional silicone rubber elastic substrate abuts against the adherend substrate, the OH group on the surface of the other substrate chemically bonds with the reactive-group containing polysiloxane. Therefore both OH groups are combined indirectly via the reactive-group containing polysiloxane, thereby both substrates being connected to each other.

A solvent used for the solution of the reactive-group containing polysiloxane, should not react with the reactive group of the polysiloxane. As the solvent, for example, water; alcohols such as methanol, ethanol, isopropanol, carbitol, sellosolve, ethylene glycol, diethylene glycol, polyethylene glycol etc.; ketons such as acetone, methylethylketone, cyclohexanone etc.; ethers such as diethylether, dipropylether, anisole etc.; esters such as ethyl acetate, butyl acetate, methyl benzoate etc.; hydrocarbons such as kexane, gasoline etc. can be exemplified. These solvents can be used solely or in combination thereof.

The reactive-group containing polysiloxane solution is prepared by dissolving the polysiloxane into the solvent in a ratio of 0.001 to 10% by weight, preferably 0.01 to 1% by weight based on 100ml of the solvent, and an additive may be added if needed. If the amount of the reactive-group containing polysiloxane is less than 0.01% by weight, the reactivity amplification effect of the OH group becomes insufficient. On the other hand, if the amount exceeds 10% by weight, the effect is no more enhanced, so that the excess reactive-group containing polysiloxane is vain.

As an additive which is added into the reactive-group containing polysiloxane solution, a tertiary amine or an organic acid that accelerates the reactions between the organosubstituent-bondable OH group on the surface of the resin or crosslinked rubber and the reactive-group containing polysiloxane, and a surfactant to prevent the generation of a patch that emerges on the three-dimensional silicone rubber elastic substrate or the adherend substrate due to the evaporation of the solvent in the solution, can be exemplified.

In the immersion treatment using the reactive-group containing polysiloxane solution, the adherend substrate made of the resin or crosslinked rubber etc. having the organosubstituent-bondable OH group or the three-dimensional silicone rubber elastic substrate is immersed at 0 to 100°C, preferably 20 to 80°C for 1sec. to 120min. preferably 1min. to 30min. to react the OH group with the reactive-group containing polysiloxane. If the temperature is less than this range, the reaction takes a long time, decreasing in productivity. If the temperature exceeds this range, the solvent seeps into the substrate, as a result, troublesome aftertreatment such as elimination of solvent is required. If the reaction time is less than the range, the reaction proceeds insufficiently, so that sufficient OH group reactivity amplification effects are not obtained. On the other hand, if the reaction time exceeds this range, productivity is decreased.

When the immersion treatment using the reactive-group containing polysiloxane solution does not operate well for improving the reactivity amplification effects of the OH group, heat treatment can be adopted. Preferable condition of the heat treatment is not categorically specified due to the kind and quality of the material of the adherend substrate and the characteristics as a product of the silicone-rubber bonded object. The heat treatment should be carried out at a comparatively low temperature and for a long time in a case where functionally the products tend to be broken at a high temperature. On the other hand, when there are no problems in heat deformation or functional deterioration, and that productivity is emphasized, the heat treatment can be carried out at a comparatively high temperature.

When these substrates are immersed into the reactive-group containing polysiloxane solution at a room temperature, the solution is absorbed onto the substrates, and then they are subjected to the heat treatment. Solvent is vaporized and as a result, the reactive-group containing polysiloxane in solid state is attached to the substrates, therefore the reactivity is improved. The heating temperature is ranging from 0 to 300°C, preferably from 80 to 200°C. If the temperature is less than this range, the reaction time is required longer and productivity is decreased. On the other hand, if the temperature exceeds the range, these substrates are decomposed. Heating time is in a range of 1sec. to 120min., preferably 1min. to 30min. If the reaction time is shorter than this range, the reaction is not completed, so that sufficient OH group reactivity amplification effect cannot be achieved. On the other hand, if the time exceeds this range, productivity is decreased. More preferably, heating is carried out at 20 to 160°C for 1min. to 60min.

Instead of immersion treatment into the reactive-group containing polysiloxane solution, spraying, and then drying treatments and heating treatment, if required, can also be adopted.

Such spraying, drying and heating treatments are carried out by putting the reactive-group containing polysiloxane solution into a sprayer, then spraying the reactive-group containing polysiloxane solution onto the surface of the adherend substrate made of the resin or the crosslinked rubber etc., or on the surface of the three-dimensional silicone rubber elastic substrate, both of which may have the organosubstituent-bondable OH group, then spraying and drying are carried out repeatedly to effectively adhere the reactive-group containing polysiloxane on the substrates, and then heating the substrates at 0 to 300°C, preferably 80 to 200°C for 1sec. to 120min., preferably 1min. to 30min., to react them. If the temperature is lower than this range, reacting time is required longer and productivity is decreased. On the other hand, if the temperature exceeds this range, the substrates are decomposed. When heating time is shorter than this range, the reaction proceeds insufficiently, so that sufficient OH group reactivity amplification effects cannot be attained. On the other hand, if this heating time exceeds this range, productivity is decreased.

The adherend substrate is preferably treated with the reactive-group containing polysiloxane solution, but the three-dimensional silicone rubber elastic substrate can be treated in order to amplify the reactivity of the OH group alike.

To enhance the reactivity between the organosubstituent-bondable OH group and the inorganic atom-bonding OH group, tin-containing catalyst such as bis(2-ethylhexanoate)tin, di-n-butylbis(2-ethylhexylmaleate)tin, dibuthyldiacetoxy tin, tin dioctyl dilaurylate etc., and titanium-containing catalyst such as di-butoxide(bis-2,4-pentanedionato)titanium, dipropoxide(bis-2,4-pentanedionato) titanium, titanium-2-ethylhexyloxide etc., which can enhance adhering speed, adhesive reaction at a low temperature and condensation reaction of the ether bond, are used. These catalysts are used as a mixture with the reactive-group containing polysiloxane solution.

After the treatment using the reactive-group containing polysiloxane, when the substrates are subjected to ultrasonic cleaning in an inactive solvent, unreacted reactive-group containing polysiloxane and a uncombined residue, both of which remain on the surface of the substrate can be eliminated, accordingly the OH groups on the surface of the substrate is further activated.

Adhesion between the three-dimensional silicone rubber elastic substrate and the adherend substrate is carried out by at first putting the non-flowable three-dimensional silicone rubber elastic substrate having the OH groups or the reactive functional groups on its surface into contact with a non-flowable and non-silicone type adherend substrate having the OH groups on its surface, which is reactive with the reactive functional groups of the elastic substrate, and then causing chemical reactions at the contact interface between both substrates to complete the adhesion through covalent bonds. The covalent bonds are formed by direct ether bond or another ether bond through the reactive-group containing polysiloxane, both of which ether bonds are formed by the OH group or the reactive functional group on the three-dimensional silicone rubber elastic substrate and the OH group on the adherend substrate.

Such adhesion is achieved by the covalent bond or especially by the ether bond formed between the polymers or between the polymer and the non-polymer substance, as well as combinations of chemical bonds which are generated in a process of polymerization of a low molecular weight monomers.

Such covalent bonds are preferably the ether bonds formed by dehydration of the surface hydroxyl groups of the three-dimensional silicone rubber elastic substrate and the surface hydroxyl groups of the adherend substrate. These surface hydroxyl groups can be beforehand blocked by a degradable functional group for protecting thereof preferably, and may be de-blocked and regenerated by irradiation of light such as ultra violet, heating or hydrolysis from the degradable functional group at the time of the adhesion.

As such functional group, a degradable functional group reactive with the surface hydroxyl groups of the three-dimensional silicone rubber elastic substrate or the adherend substrate, such as -SiA¹ₘ(OB¹)₃₋ₘ (wherein A¹ is a general functional group of a silicone polymer such as CH₃-, CH₂=CH-, C₆H₅-, F₃C₃H₆-, B¹ is an alkyl group, m is the number of 1 to 3), -SiA²[OSi(OB²)₂]₂OB (wherein A² is a general functional group of a silicone polymer such as CH₃-, CH₂=CH-, C₆H₅-, F₃C₃H₆-, and B² is an alkyl group), -NCO, -CH(O)CH₂, -CHO, -(CH(+H)CO)₂O, -SO₂Cl, -COCl, -NHCOOC(CH₃)₃, -NHCOOCH(CH₃)₂, -NHCOOCH₃, -NHCOOC₆H₅, -NHCOOC₆H₄NO₂, -NHCOOC₆H₄CN, -SO₂C₁₀H₅N₂O etc. can be exemplified.

To cause the chemical reaction between the surface hydroxyl groups of the three-dimensional silicone rubber elastic substrate and the hydroxyl groups of the adherend substrate, the adherend substrate and the elastic substrate should be approached at closely within reactive field as chemical reaction is proceeded when they abut against each other. The reactive field where chemical reaction is proceeded is less than 0.5nm, which intermolecular force lies for instance.

A factor which limits the approach of the adherend substrate to the elastic substrate is a surface roughness of the materials of both substrates, and a factor which promotes the approach of both adherend and elastic substrates is molecular chain mobility. Generally, if material has large surface roughness, functional groups may not be able to reach a reactive field where reaction is proceeded. However, because the three-dimensional silicone rubber elastic substrate has molecular chain mobility, the reactive functional group which is reactive with the OH group can sufficiently be approached at closely the OH group despite both adherend and elastic substrates have surface roughness fairly.

Accordingly, even if the three-dimensional silicone rubber elastic substrate is non-flowable, it has a function to compensate its surface roughness and the elastic substrate can adhere to the adherend substrate made of various materials such as metal, resin, ceramics, glass and crosslinked rubber.

Approach of the OH group to the reactive functional group which is reactive with the OH group is enhanced by eliminating an air medium at a contact interface under a reduced condition, preferably under a vacuum condition or by giving a stress (i.e. load) on the contact interface, or further warming the contact interface.

Examples of a silicone-rubber bonded object of the present invention and Comparative Examples which are outside the present invention will be explained hereinafter.

### (Manufacture of the three-dimensional silicone rubber elastic substrate)

Three-dimensional silicone rubber elastic substrates were manufactured from three typical types of silicone rubber such as peroxide-crosslinking (CQP) type-, addition-crosslinking (CQA) type- and condensation-crosslinking (CQC) type- silicone rubber.

### (Preparatory Example 1: a silicone rubber elastic substrate)

Manufacturing method of a molded elastic substrate using peroxide-crosslinking (CQP) type- silicone rubber will be described as follows. To 100 parts by weight of commercially available rubber compound (SH-851-U produced by Dow Corning Toray Silicone Co., Ltd., that is blended with a silicone raw rubber of peroxide-crosslinking type millable polyvinylmethyl silicone rubber, filler, a plasticizer, colorant etc.), 0.5 parts by weight of 2,5-dimethyl-2,5-dihexane as an organic peroxide crosslinking agent was added and then mixed by an open roll mill, then molded in a mold under compression by pressurization at 170°C for 10min. to obtain a plate-like three-dimensional silicone rubber elastic substrate having a dimension of 2mm x 30mm x 50mm as a three-dimensional silicone rubber molded article. This silicone rubber had physical properties of a hardness of 50, tensile strength: 8.9MPa, elongation: 320%, tearing strength: 21N/mm, compression set: 10% (150°C x 22hrs).

### (Preparatory Example 2: a silicone rubber elastic substrate)

Manufacturing method of an elastic substrate molded using an addition crosslinking (CQA) type- silicone rubber is as follows. 100 parts by weight of commercially available rubber compound (A and B fluids of SE-6721 produced by Dow Corning Toray Silicone Co., Ltd., that is blended with a silicone raw rubber of both of addition crosslinking type vinyl-terminated polydimethylsiloxane and H-terminated polydimethylsiloxane), filler, a plasticizer, colorant etc.) was put into a mold, then molded therein under compression by pressurization at 160°C for 20min. to obtain a plate-like three-dimensional silicone rubber elastic substrate having a dimension of 2mm x 30mm x 50mm as a three-dimensional silicone rubber molded article. This silicone rubber had physical properties of a hardness of 45, tensile strength: 8.0MPa, elongation: 300%, tearing strength: 18N/mm, compression set: 15% (150°C x 22hrs).

### (Preparatory Example 3: a silicone rubber elastic substrate)

Manufacturing method of a molded elastic substrate using a condensation-crosslinking (CQC) type- silicone rubber is as follows. 100 parts by weight of condensation-crosslinking type silanol-terminated polydimethylsiloxane (DMS-S33 produced by Chisso Corporation, molecular weight: 43,500), 40 parts by weight of hexamethyl silazane-treated silica, 4 parts by weight of CH₃Si (OCOCH₃)₃ and 0.1 parts by weight of dibutyl tin maleate were mixed to prepare a silicone rubber compound. This silicone rubber compound was put into a mold, then heated at 140°C for 20min. to obtain a plate-like three-dimensional silicone rubber elastic substrate as a three-dimensional silicone rubber molded article. This silicone rubber had physical properties of a hardness of 40, tensile strength: 7.8MPa, elongation: 340%, tearing strength: 18N/mm, compression set: 18% (150°C x 22hrs).

### (Preparation of an adherend substrate)

Next, as materials of a typical metal, resin and crosslinked rubber for an adherend substrate, an Al board (Al, 1mm x 30mm x 50mm produced by Nilaco Corporation), epoxy resin (EP resin, 0.5mm x 30mm x 50mm, trade name: RF-4, produced by Hitachi Chemical Co., Ltd.), glass board as a kind of ceramics (glass, 1mm x 30mm x 50mm, produced by Nilaco Corporation), and styrene-butadiene copolymer crosslinked rubber board (SBR, 1mm x 30mm x 50mm) was used. These were beforehand subjected to ultrasonic cleaning in ethanol and then used as adherend substrates.

Examples 1 to 6 and Comparative Examples 1 to 3 were experimental manufactures of two-layered silicone-rubber bonded objects with or without a corona discharge treatment.

### [Example 1]

### (Manufacture of silicone-rubber bonded object)

At an end portion having a width of 2cm of each of the peroxide crosslinking type three-dimensional silicone rubber elastic substrates manufactured in Preparatory Example 1 and each of the four kinds of adherend substrates of Al, EP resin, glass and SBR rubber, were covered by a tape respectively. Then they were subjected to a corona discharge treatment using an apparatus for corona surface modification under an atmospheric pressure (CoronaMaster, trade name, produced by Shinko Electric & Instrumentation Co., Ltd.), under conditions of power source: AC100V, gap length: 3mm, output voltage: 9kV (surface potential), electric power: 18W, oscillating frequency: 20kHz, temperature: 20°C, moving speed: 2m/min., times of movement: 3 times. Immediately after this treatment, each three-dimensional silicone rubber elastic substrate was placed on the adherend substrate and they were put into a vacuum packing bag for home use and deaerated by expeling any remaining air to make degassed vacuum packaging. Then they were heated at 100°C for 5min. to complete adhesion, obtaining the silicone-rubber bonded objects.

### (Evaluation of physical properties of silicone-rubber bonded object: peeling test)

The obtained silicone-rubber bonded objects were forcibly peeled off to evaluate physical properties of peel strength. A 10mm-width cut was made on the elastic substrate side of the silicone-rubber bonded object along the adherend surface between the three-dimensional silicone rubber elastic substrate and the adherend substrate, then peel strength (i.e. adhesion strength) was determined at a moving speed of 20mm/min. at 20°C according to JIS K-6301 using an Autograph P-100 (produced by Shimadzu Corporation, trade name). The peeled fracture surface was observed to determine which a side in both of elastic substrate side and adherend substrate side was fractured. The rate of surface coverage covered by the three-dimensional silicone rubber elastic substrate on the peeled fracture surface was measured. As regards the evaluation of the rate, the levels of the surface coverage are shown as follows. aa: 100% coverage, a: less than 100% but not less than 80%, b: less than 80% but not less than 30%, c: more than 0% but not more than 30%. The results are combined together and shown in Table 1.

### [Example 2]

Silicone-rubber bonded objects were obtained in a manner similar to Example 1 except that the corona discharge treatment of the adherend substrate was not carried out. Physical properties were evaluated in a manner similar to Example 1. The results are combined together and shown in Table 1.

### [Comparative Example 1]

Silicone-rubber bonded objects were obtained in a manner similar to Example 1 except that the corona discharge treatment of the three-dimensional silicone rubber elastic substrate and adherend substrate was not carried out. Physical properties were evaluated in a manner similar to Example 1. The results are combined together and shown in Table 1.

### (Examples 3 to 6, Comparative Examples 2 to 3)

Silicone-rubber bonded objects were obtained in a manner similar to Example 1 except for what kind of material was used for the three-dimensional silicone rubber elastic substrate and whether or not the corona discharge treatment was carried out for the three-dimensional silicone rubber elastic substrates and the adherend substrates as shown in Table 1. Physical properties were evaluated in a manner similar to Example 1. The results are combined together and shown in Table 1.

**Table 1**

| Bonded Object (2 Layers) | Silicone Rubber Elastic Substrate | | Kind of Adherend Substrate and Physical Properties of Bonded Object | | | | |
|---|---|---|---|---|---|---|---|
| | | | (kN/m) | Upper Column : Peel Strength | | | |
| | | | | Middle Column : Fracture Mode | | | |
| | | | | Lower Column : Surface Coverage | | | |
| | Type | Corona Discharge Treatment | Corona Discharge Treatment | Al | EP Resin | Glass | SBR Rubber |
| Ex. 1 | Peroxide Crosslinking Type (Prep. Ex.1) | With | With | 4.5 | 4.2 | 3.9 | 3.2 |
| | | | | Fracture in Elastic Substrate | Fracture in Elastic Substrate | Fracture in Elastic Substrate | Fracture in Elastic Substrate |
| | | | | aa | aa | aa | a |
| Ex. 2 | | With | Without | 1.2 | 2.6 | 2.3 | 0 |
| | | | | Fracture in Elastic Substrate | Fracture in Elastic Substrate | Fracture in Elastic Substrate | Interface Separation |
| | | | | c | c | c | c |
| Comp. Ex. 1 | | Without | Without | 0 | 0 | 0 | 0 |
| | | | | Interface | Interface Separation | Interface Separation | Interface |
| | | | | c | c | c | c |
| Ex. 3 | Addition Crosslinking Type (Prep. Ex. 2) | With | With | 3.2 | 3.2 | 3.1 | 2.9 |
| | | | | Fracture in Elastic Substrate | Fracture in Elastic Substrate | Fracture in Elastic Substrate | Fracture in Elastic Substrate |
| | | | | aa | aa | aa | aa |
| Ex. 4 | | With | Without | 1.1 | 1.8 | 1.6 | 0 |
| | | | | Fracture in Elastic Substrate | Fracture in Elastic Substrate | Fracture in Elastic Substrate | Interface Separation |
| | | | | C | c | c | c |
| Comp. Ex. 2 | | Without | Without | 0 | 0 | 0 | 0 |
| | | | | Interface | Interface Separation | Interface Separation | Interface |
| | | | | c | c | c | c |
| Ex. 5 | Condensation Crosslinking Type (Prep. Ex. 3) | With | With | 3.3 | 3.3 | 3.1 | 3.0 |
| | | | | Fracture in Elastic Substrate | Fracture in Elastic Substrate | Fracture in Elastic Substrate | Fracture in Elastic Substrate |
| | | | | aa | aa | aa | aa |
| Ex. 6 | | With | Without | 1.0 | 1.6 | 1.3 | 0 |
| | | | | Fracture in Elastic Substrate | Fracture in Elastic Substrate | Fracture in Elastic Substrate | Interface Separation |
| | | | | c | c | c | c |
| Comp. Ex. 3 | | Without | Without | 0 | 0 | 0 | 0 |
| | | | | Interface | Interface Separation | Interface Separation | Interface |
| | | | | c | c | c | c |

As shown in Table 1, the silicone-rubber bonded objects of Examples 1, 3 and 5 in which were made of corona-discharge treated plate-like three-dimensional silicone rubber elastic substrates and the corona-discharge treated adherend substrates made of non-silicone rubber, showed an extremely high peel strength of 4.5 to 3.0kN/m, irrespective of the kind of materials of adherend substrates and despite both substrates were mutual non-flowable ones. And their peeled fracture surfaces were found on the three-dimensional silicone rubber elastic substrate side and further the rate of surface coverage of almost all the three-dimensional silicone rubber elastic substrates came up to 100%, and the elastic and adherend substrates adhered strongly, surely and homogeneously to each other across the entire region of their bonding surfaces.

The silicone-rubber bonded objects of Examples 2, 4 and 6 in which only the three-dimensional silicone rubber elastic substrate was treated with corona discharge showed a comparatively strong peel strength, because the OH group already existed on the surface of the adherend substrate, though the strength is not so large as that of Examples 1, 3 and 5. This lower adhesion strength might arise from a lower concentration of the OH group when compared to that of the Examples 1, 3 and 5.

On the other hand, the peel strength of the silicone-rubber bonded objects of Comparative Examples 1, 2 and 3 in which the three-dimensional silicone rubber elastic substrates and the adherend substrates were not treated with corona discharge was OkN/m. Complete boundary separation was observed. The peeled interfaces were so clean that there might be no chemical bond between both surfaces, and these objects did not act at all as a bonded object.

In the following Examples 7 to 15 and Comparative Examples 4 to 12, three-layer silicone-rubber bonded objects were manufactured with or without corona discharge treatment. The three-dimensional silicone rubber elastic substrate was sandwiched to produce a 3-layer laminate.

### (Example 7)

Both surfaces of the plate-like three-dimensional silicone rubber elastic substrate (1mm x 5mm x 10mm) used in Example 1 were subjected to a corona discharge treatment under conditions of power source: AC 100V , gap length: 3mm, output voltage: 9kV (surface potential), electric power: 18W, oscillating frequency: 20kHz, temperature: 20°C, moving speed: 2m/min., times of movement: 3 times. At around the same time, two Cu plates (1mm x 10 mm x 50 mm) which were the adherend substrates were subjected to a corona discharge treatment. The three-dimensional silicone rubber elastic substrate were sandwiched with the corona discharge treated Cu plates under condition of contact area of 5cm² of both surfaces of the elastic substrate with the plates, then the load of 20g/cm² was pressed and heated at 80°C for 20min. to obtain a silicone-rubber bonded object. In a manner similar to Example 1, physical properties were evaluated. The results are combined together and shown in Table 2.

### (Comparative Example 4)

A silicone-rubber bonded object was obtained in a manner similar to Example 7 except that none of the three-dimensional silicone rubber elastic substrate and the adherend substrate was subjected to any corona discharge treatment. In a manner similar to Example 1, the physical properties were evaluated. The results are combined together and shown in Table 2.

### (Examples 8 to 15, Comparative Examples 4 to 12)

Silicone-rubber bonded objects were obtained in a manner similar to Example 7 except for what kind of material was used for the three-dimensional silicone rubber elastic substrate and whether or not the corona discharge treatment was carried out for the three-dimensional silicone rubber elastic substrate and the adherend substrate as shown in Tables 2 and 3. In a manner similar to Example 1, properties of shear adhesion strength of the three-layered bonded object in which the three-dimensional silicone rubber elastic substrate was sandwiched, were evaluated. The results are combined together and shown in Tables 2 and 3.

**Table 2**

| Bonded Object (3 Layers) | Kind of Substrates and Treatment | | | | Physical Properties of Bonded Object |
|---|---|---|---|---|---|
| | Upper Side Adherend Substrate | Silicone Rubber Elastic Substrate | Lower Side Adherend Substrate | Corona Discharge Treatment (3 Substrates) | Upper Column: Peel Strength (kN/m) |
| | | | | | Middle Column: Fracture Mode |
| | | | | | Lower Column: Surface Coverage |
| Ex. 7 | Cu | Peroxide Crosslinking Type (Prep. Ex. 1) | Cu | With | 5.5 |
| | | | | | Fracture in Elastic Substrate |
| | | | | | aa |
| Comp. Ex. 4 | | | | Without | 0 |
| | | | | | Interface Separation |
| | | | | | c |
| Ex. 8 | Cu | Peroxide Crosslinking Type (Prep. Ex. 1) | EP | With | 5.2 |
| | | | | | Fracture in Elastic Substrate |
| | | | | | aa |
| Comp. Ex. 5 | | | | Without | 0 |
| | | | | | Interface Separation |
| | | | | | c |
| Ex. 9 | Cu | Peroxide Crosslinking Type (Prep. Ex. 1) | Glass | With | 4.8 |
| | | | | | Fracture in Elastic Substrate |
| | | | | | aa |
| Comp. Ex. 6 | | | | Without | 0 |
| | | | | | Interface separation |
| | | | | | c |
| Ex. 10 | Cu | Peroxide Crosslinking Type (Prep. Ex. 1) | SBR | With | 5.3 |
| | | | | | Fracture in Elastic Substrate |
| | | | | | aa |
| Comp. Ex. 7 | | | | Without | 0 |
| | | | | | Interface Separation |
| | | | | | c |

**Table 3**

| Bonded Object (3Layers) | Kind of Substrates and Treatment | | | | Physical Properties of Bonded Object |
|---|---|---|---|---|---|
| | Upper Side Adherend Substrate | Silicone Rubber Elastic Substrate | Lower Side Adherend Substrate | Corona Discharge Treatment (3 Substrates) | Upper Column: Peel Strength (kN/m) |
| | | | | | Middle Column: Fracture Mode |
| | | | | | Lower Column: Surface Coverage |
| Ex. 11 | EP | Peroxide Crosslinking Type (Prep. Ex. 1) | EP | With | 5.3 |
| | | | | | Fracture in Elastic Substrate |
| | | | | | aa |
| Comp. Ex. 8 | | | | Without | 0 |
| | | | | | Interface Separation |
| | | | | | c |
| Ex. 12 | EP | Peroxide Crosslinking Type (Prep. Ex. 1) | Glass | With | 4.6 |
| | | | | | Fracture in Elastic Substrate |
| | | | | | aa |
| Comp. Ex. 9 | | | | Without | 0 |
| | | | | | Interface Separation |
| | | | | | c |
| Ex. 13 | EP | Peroxide Crosslinking Type (Prep. Ex. 1) | SBR | With | 5.6 |
| | | | | | Fracture in Elastic Substrate |
| | | | | | aa |
| Comp. Ex. 10 | | | | Without | 0 |
| | | | | | Interface Separation |
| | | | | | c |
| Ex. 14 | Glass | Peroxide Crosslinking Type (Prep. Ex. 1) | Glass | With | 3.8 |
| | | | | | Fracture in Elastic Substrate |
| | | | | | aa |
| Comp. Ex. 11 | | | | Without | 0 |
| | | | | | Interface Separation |
| | | | | | c |
| Ex. 15 | SBR | Peroxide Crosslinking Type (Prep. Ex. 1) | SBR | With | 5.8 |
| | | | | | Fracture in Elastic Substrate |
| | | | | | aa |
| Comp. Ex. 12 | | | | Without | 0 |
| | | | | | Interface Separation |
| | | | | | c |

As shown in Tables 2 and 3, the silicone-rubber bonded objects of Examples 7 to 15, in which the plate-like three dimensional silicone rubber elastic substrate and the adherend substrate made of a non-silicone rubber material were subjected to the corona discharge treatment, had an extremely high peel strength of 5.8 to 3.8kN/m, irrespective of the kind of material of the adherend substrates and despite the adhesion was carried out between the mutual non-flowable objects. Their peeled fracture surfaces were found on the three-dimensional silicone rubber elastic substrate side and the rate of surface coverage of all of the three-dimensional silicone rubber elastic substrate was 100%, and the elastic and adherend substrates adhered strongly, surely and homogeneously to each other across the entire region of their bonding surfaces.

On the other hand, the peel strength of the silicone-rubber bonded objects of Comparative Examples 4 to 12 in which the three-dimensional silicone rubber elastic substrates and the adherend substrates were not treated with corona discharge was OkN/m. Complete boundary separation was observed. The peeled interfaces were so clean that there might be no chemical bond between both surfaces, and these objects did not act at all as a bonded object.

In the following Examples 16 to 27 and Comparative Examples 13 to 18, some of the three-dimensional silicone rubber elastic substrates and the adherend substrates were subjected to a corona discharge treatment, but some of them were not subjected to a corona discharge treatment. Further, some of the adherend substrates were subjected to an amplifying treatment, but some of them were not subjected to an amplifying treatment. Each two-layer type silicone-rubber bonded object was experimentally manufactured by packing the three-dimensional silicone rubber elastic substrate with the adherend substrate.

The adherend substrates, which were used here, were polyethylene (PE) plate (trade name: 07-126-04-01, produced by Kokugo Co., Ltd., 1mm x 30mm x 50mm), polypropylene (PP) plate (trade name: 07-175-03, produced by Kokugo Co., Ltd., 1mm x 30mm x 50mm), polyisoprene (PI) plate (trade name: H07-119-04, produced by Kokugo Co., Ltd., 0.05mm x 30mm x 50mm), polyamide (PA) plate (trade name: 07-142-04, produced by Kokugo Co., Ltd., 1mm x 30mm x 50mm), polycarbonate (PC) plate (trade name: 02-02, produced by Kokugo Co., Ltd., 1mm x 30mm x 50mm), and hexafluoropropylene-vinylidenefluoride copolymer (FKM) (trade name: 02, produced by Kokugo Co., Ltd., 1mm x 30mm x 50mm).

### [Example 16]

A PE plate was subjected to a corona discharge treatment under conditions of power source: AC100V, gap length: 3mm, output voltage: 9kV (surface potential), electric power: 18W, oscillating frequency: 20kHz temperature: 20°C, moving speed: 2m/min., the times of movement: 3 times, and then immersed into a reactive-group containing polysiloxane solution (500ml) which was an alcohol solution comprising 1g of polyethoxysiloxane (trade name; PSI-021, produced by AZmax Co.) and 0.1g of tetraethoxytitanate at 40°C for 30min. to amplify its reactivity, and then subjected to heat treatment at 80°C for 20min., obtaining a reactivity amplified adherend substrate. The three-dimensional silicone rubber elastic substrate obtained in Example 1 as three-dimensional silicone rubber treated with the corona discharge treatment, and the adherend subject obtained here were contacted each other in a vacuum packing and heated at 80°C for 30min., obtaining a two-layer bonded object. Physical properties of this bonded object were evaluated in a manner similar to Example 1. The results are combined together and shown in Table 4.

### (Examples 17 to 27, Comparative Examples 13 to 18)

Silicone-rubber bonded objects were obtained in a manner similar to Example 16, except that what kind of material was used for the adherend substrate, whether or not the corona discharge treatment was carried out for both three-dimensional silicone rubber elastic substrates and the adherend substrates and whether or not the amplification treatment was carried out for the adherend substrate are shown in Tables 4 and 5. In a manner similar to Example 1, physical properties of the shear adhesion strength of the two-layer bonded objects in which the three-dimensional silicone rubber elastic substrates were manufactured by packing, were evaluated. Results are combined together and shown in Tables 4 and 5.

**Table 4**

| Bonded Object (2Layers) | Silicone Rubber Elastic Substrate | | Kind and Treatment of Adherend Substrate | | | Physical Properties of Bonded Object |
|---|---|---|---|---|---|---|
| | Type | Corona Discharge Treatment | Kind | Corona Discharge Treatment | Amplifying Treatment | Upper Column: Peel Strength (kN/m) |
| | | | | | | Middle Column: Fracture Mode |
| | | | | | | Lower Column: Surface Coverage |
| Ex. 16 | Peroxide Crosslinking Type (Prep. Ex. 1) | With | PE | With | With | 4.1 |
| | | | | | | Fracture in Elastic Substrate |
| | | | | | | aa |
| Ex. 17 | | With | PP | With | With | 4.2 |
| | | | | | | Fracture in Elastic Substrate |
| | | | | | | aa |
| Ex. 18 | | With | PI | With | With | 4.6 |
| | | | | | | Fracture in Elastic Substrate |
| | | | | | | aa |
| Ex. 19 | | With | PA | With | With | 4.5 |
| | | | | | | Fracture in Elastic Substrate |
| | | | | | | aa |
| Ex. 20 | | With | PC | With | With | 4.8 |
| | | | | | | Fracture in Elastic Substrate |
| | | | | | | aa |
| Ex. 21 | | With | FMK | With | With | 5.2 |
| | | | | | | Fracture in Elastic Substrate |
| | | | | | | aa |

**Table 5**

| Bonded Object (2Layers ) | Silicone Rubber Elastic Substrate | | Adherend substrate | | | Physical Properties of Bonded Object |
|---|---|---|---|---|---|---|
| | Type | Corona Discharge Treatment | Kind | Corona Discharge Treatment | Amplifying Treatment | Upper Column: Peel Strength (kN/m) |
| | | | | | | Middle Column: Fracture Mode |
| | | | | | | Lower Column: Surface Coverage |
| Ex. 22 | Peroxide Crosslinking Type (Prep. Ex. 1) | With | PE | With | Without | 1.2 |
| | | | | | | Fracture in Elastic Substrate |
| | | | | | | c |
| Comp. Ex. 13 | | Without | | Without | With | 0 |
| | | | | | | Interface Separation |
| | | | | | | c |
| Ex. 23 | Peroxide Crosslinking Type (Prep. Ex. 1) | With | PP | With | Without | 1.3 |
| | | | | | | Fracture in Elastic Substrate |
| | | | | | | c |
| Comp. Ex. 14 | | Without | | Without | With | 0 |
| | | | | | | Interface Separation |
| | | | | | | c |
| Ex. 24 | Peroxide Crosslinking Type (Prep. Ex. 1) | With | PI | With | Without | 1.9 |
| | | | | | | Fracture in elastic substrate |
| | | | | | | b |
| Comp. Ex. 15 | | Without | | Without | With | 0 |
| | | | | | | Interface Separation |
| | | | | | | c |
| Ex. 25 | Peroxide Crosslinking Type (Prep. Ex. 1) | With | PA | With | Without | 2.6 |
| | | | | | | Fracture in Elastic Substrate |
| | | | | | | b |
| Comp. Ex. 16 | | Without | | Without | With | 0 |
| | | | | | | Interface Separation |
| | | | | | | c |
| Ex. 26 | Peroxide crosslinking type (Prep. Ex. 1) | With | PC | With | Without | 0.9 |
| | | | | | | Fracture in Elastic Substrate |
| | | | | | | c |
| Comp. Ex. 17 | | Without | | Without | With | 0 |
| | | | | | | Interface Separation |
| | | | | | | c |
| Ex. 27 | Peroxide Crosslinking Type (Prep. Ex. 1) | With | FMK | With | Without | 2.9 |
| | | | | | | Fracture in Elastic Substrate |
| | | | | | | b |
| Comp. Ex. 18 | | Without | | Without | With | 0 |
| | | | | | | Interface Separation |
| | | | | | | c |

Thus, the plate-like three-dimensional silicone rubber elastic substrates were subjected to the corona discharge treatment, and the adherend substrates made of nonsilicone rubber were also subjected to the corona discharge treatment and then these adherend substrates were subjected to the reactivity amplifying treatment in Examples 16 to 21. As shown in Tables 4 and 5, the silicone-rubber bonded objects in Examples 16 to 21 were made from these treated substrates and had extremely high peel strength of 5.2 to 4.1, irrespective of the kind of material of the adherend substrates and despite both substrates were mutual non-flowable ones. In addition their peeled fracture surfaces were found on the three-dimensional silicone rubber elastic substrate side and further the rate of the surface coverage of all three-dimensional silicone rubber elastic substrates was 100%. The elastic and adherend substrates adhered strongly, surely and homogeneously to each other across the entire region of their bonding surfaces.

The silicone-rubber bonded objects of Examples 22 to 27, in which the three-dimensional silicone rubber elastic substrates and the like were subjected to only the corona discharge treatment, had not so good peel strength as seen in other Examples of those Tables, but had comparatively good peel strength. However the concentration of the OH group of them was not so high as that of Examples 1, 3 and 5, so that their adhesion strength was somewhat low level. The material of the adherend substrates shown in those Tables 4 and 5 could not sufficiently increase the concentration of their OH group only by the corona discharge treatment, so that their adhesion strength may be comparatively low. It is realized that when the OH groups were amplified concentratedly, the two-layer type bonded objects having extremely high adhesion strength can be obtained.

On the other hand, the silicone-rubber bonded object of Comparative Examples 13 to 18, in which the elastic silicone rubber objects and the adherend substrates were not subjected to any corona discharge treatment and reactivity amplifying treatment, had peel strength of OkN/m. As their peeled surface showed a clean interfacial separation, it is realized that there was no chemical bonding which connects both surfaces to each other so that the objects did not act at all as a bonded object.

In Examples 28 to 29 and Comparative Examples 19 to 20, the several surface hydroxyl groups of the three-dimensional silicone rubber elastic substrate were blocked previously with degradable functional group. At the time of the adhesion, the OH group was de-blocked and regenerated, and laminated silicone-rubber bonded objects were experimentally manufactured.

### (Example 28)

Both surfaces of the same kind of plate-like three-dimensional silicone rubber elastic substrate used in Example 1 (1 x 5 x 10mm) were subjected to a corona discharge treatment under conditions of power source: AC 100V, gap length: 3mm, output voltage: 9kV (surface potential), electric power: 18W, oscillating frequency: 20kH_{z}, temperature: 20°C , moving speed: 2m/min., times of movement: 3 times to generate OH groups, then immersed in an acetone solution of 0.01mol/l concentration of benzoyl chloride (BC; produced by Tokyo Chemical Industry Co., Ltd., Extra Pure grade C₆H₅COCl) and triethylamine (TEA; produced by Chemical Industry Co., Ltd., Extra Pure grade N(C₂H₅)₃) respectively at 20°C for 10min. to obtain a BC-blocked three-dimensional silicone rubber plate with blocked OH groups. The BC-blocked three-dimensional silicone rubber plate was kept under a condition of a humidity of 65%, at 30°C for 240 hours. Quartz glass was subjected to the same corona discharge treatment as described above and then laid on the silicone rubber plate and heated at 150°C for 10min., to obtain a silicone-rubber bonded object. The silicone-rubber bonded objects were evaluated through the peeling test described above. The results are shown in Table 6.

### (Example 29 and Comparative Examples 19 to 20)

In Example 29, a silicone-rubber bonded object was obtained in a manner similar to Example 28 except that nitrobenzyl chloroformate (CFN; produced by Tokyo Chemical Industry Co., Ltd., Extra Pure grade CICOOCH₂C₆H₄NO₂) was used instead of BC, and ultraviolet light irradiation (5000mJ/cm³) was carried out using a high-pressure mercury lamp instead of heating in Example 28. In Comparative Examples 19 to 20, silicone-rubber bonded objects were obtained in the same manner as described in Examples 28 and 29 except that BC and CFN in Examples 28 and 29 were not used. The obtained silicone-rubber bonded objects were evaluated through peeling test described above. Results are shown in Table 6.

**Table 6**

| | Physical Properties of Bonded Object | |
|---|---|---|
| | Upper Column: BC Treatment | Upper column: CFN Treatment |
| | Lower Column: Peel Strength (kN/m) | Lower Column: Ppeel Strength (kN/m) |
| Ex. 28 | With BC Treatment 2.8 | - |
| Comp. Ex. 19 | Without BC Treatment 0.4 | - |
| Ex. 29 | - | With CFN Treatment |
| | | 2.9 |
| Comp. Ex. 20 | - | Without CFN Treatment |
| | | < 0.1 |

As shown in Table 6, in Comparative Examples 19 and 20, the corona discharge treated three-dimensional silicone rubber plates became inactive when they were kept for a long period of time and therefore showed no adhesiveness even if the kept rubber plates were heated or irradiated with UV light. It was found that in Examples 28 to 29, the three-dimensional silicone rubber plates which were BC blocked or CFN blocked were stable even if they were kept for a long period of time, but their adhesive function was revitalized through de-blocking by contacting them with a heating medium or irradiating them with UV light.

Following Examples 30 to 34 relate to a two-layer silicone-rubber bonded object made of a three-dimensional silicone rubber elastic substrate and an adherend substrate made of the same or different elastic silicone rubber.

### [Examples 30 to 34]

Silicone-rubber bonded objects were obtained in a manner similar to Example 1 except that the three-dimensional silicone rubber elastic substrates and the adherend substrate were made of the same or different elastic silicone rubber described in Table 7. Physical properties of them were evaluated in a manner similar to Example 1. The results are combined together and showed in Table 7.

**Table 7**

| Bonded Object (2 Layers) | Type | | Physical Properties of Bonded Oobject |
|---|---|---|---|
| | Silicone Rubber Elastic Substrate | Adherend Substrate | Upper Column: Peel Strength (kN/m) |
| | | | Middle Column: fracture Mode |
| | | | Lower Column: Surface Coverage |
| Ex. 30 | Peroxide Crosslinking Type (Prep. Ex. 1) | Peroxide Crosslinking Type (Prep. Ex. 1) | 4.5 |
| | | | Fracture in Rubber |
| | | | aa |
| Ex. 31 | | Addition Crosslinking Type (Prep. Ex. 2) | 4.4 |
| | | | |
| | | | aa |
| Ex. 32 | | Condensation Crosslinking Type (Prep. Ex. 3) | 4.4 |
| | | | Fracture in Rubber |
| | | | aa |
| Ex. 33 | Addition Crosslinking Type (Prep. Ex. 2) | Addition Crosslinking Type (Prep. Ex. 2) | 4.3 |
| | | | Fracture in Rubber |
| | | | aa |
| Ex. 34 | Condensation Crosslinking Type (Prep. Ex. 3) | Condensation Crosslinking Type (Prep. Ex. 3) | 4.2 |
| | | | Fracture in Rubber |
| | | | aa |

As shown in Table 7, even if both of the silicone rubber elastic substrate and adherend substrate were made of crosslinked rubber such as silicone rubber, the bonded objects can be obtained. Those bonded objects had extremely high adhesion strength of 4.2 to 4.5kN/m. The peel fracture surface resided in either rubber substrate. The rate of surface coverage thereof was 100%. It was found that all area of the adhesion surface between the elastic substrate and the adherend substrate was strongly, surely and homogeneously bonded.

### Industrial Applicability

The silicone-rubber bonded objects of the present invention have high adhesion strength, so that the bonded objects can be useful for industrial goods or articles for daily use such as hoses, O-rings, packings, oil seals, bonded articles with metal, diaphragms, gaskets, large size rubber rolls, rubber rolls for copy machines, conveyer belts, reinforced belts, rubber products for medical use, rubber products for electric or electronic parts, architectural rubber products, computer related products, car related products, bus or truck related products, aircraft related products. etc.

## Claims

1. A silicone-rubber bonded object comprising;
a three-dimensional silicone rubber elastic substrate having hydroxyl groups on a surface thereof laminated with an adherend substrate having hydroxyl groups on a surface thereof,
and the substrates being connected to each other through covalent bonds between the hydroxyl groups of both,
wherein the hydroxyl groups of the elastic substrate and the hydroxyl groups of the adherend substrate are combined by the covalent bonds through a reactive-group containing polysiloxane that is connected to both of the hydroxyl groups of the elastic substrate and the adherend substrate, and
the reactive-group containing polysiloxane preliminarily-bonded to the hydroxyl group of the three-dimensional silicone rubber elastic substrate is chemically bonded to the hydroxyl group of the adherend substrate by the covalent bonds,
and the reactive-group containing polysiloxane comprises;
p repeating unit or units of -{O-Si(-A¹)(-B¹)}-,
q repeating units of -{O-Ti(-A²)(-B²)}-, and
r repeating unit or units of -{O-Al(-A³)}- :
wherein in each repeating unit, p is the number of 0 or 2 to 200, q is the number of 2 to 200, r is the number of 0 or 2 to 100, and p+q+r>2; each of -A¹, -A² and -A³ is either one of a group of -CH₃, - C₂H₅, -CH=CH₂, -CH(CH₃)₂, -CH₂CH(CH₃)₂, -C(CH₃)₃, -C₆H₅ or -C₆H₁₂, or a reactive group for forming the covalent bond being selected from the group consisting of -OCH₃, -OC₂H₅, -OCH=CH₂, -OCH(CH₃)₂,-OCH₂CH(CH₃)₂, -OC(CH₃)₃, -OC₆H₅ and -OC₆H₁₂; each of -B¹ and -B² is either one of a group of -N(CH₃)COCH₃ or -N(C₂H₅) COCH₃, or a reactive group for forming the covalent bond being selected from the group consisting of -OCH₃, -OC₂H₅, -OCH=CH₂, -OCH(CH₃)₂, -OCH₂CH(CH₃)₂,-OC(CH₃)₃, -OC₆H₅, -OC₆H₁₂, -OCOCH₃, -OCOCH(C₂H₅)C₄H₉, -OCOC₆H₅,-ON=C(CH₃)₂ and -OC(CH₃)=CH₂; and at least one of the -A¹, -A², -A³,-B¹ and -B² in the repeating units having positive number of p, q or r is the reactive group,
and the hydroxyl groups are formed on the surfaces by a corona discharge treatment and/or a plasma treatment over the elastic substrate and/or the adherend substrate.

2. The silicone-rubber bonded object according to Claim 1, wherein the covalent bonds are ether bonds through the reactive-group containing polysiloxane.

3. The silicone-rubber bonded object according to Claim 1, wherein the hydroxyl groups on the elastic substrate or the hydroxyl groups on the adherend substrate are formed by cleavaging a blocking-protection thereof.

4. The silicone-rubber bonded object according to Claim 1, wherein the adherend substrate is made of metal, resin, ceramics, or crosslinked rubber.

5. The silicone-rubber bonded object according to Claim 4,
wherein the three-dimensional silicone rubber elastic substrate is made of at least one of a peroxide crosslinking type silicone rubber, an addition crosslinking type silicone rubber, a condensation crosslinking type silicone rubber, or a blended rubber of at least of thus silicone rubbers with an olefin rubber,

6. The silicone-rubber bonded object according to Claim 1, wherein the covalent bonds are formed under a load treatment by giving a stress or a reduced pressure treatment through a vacuum by deaeratiion by expelling any remaining air in a vacuum packing bag.

7. The silicone-rubber bonded object according to Claim 1, wherein the reactive-group containing polysiloxane is a compound of block copolymerization or random copolymerization of the repeating units.

8. The silicone-rubber bonded object according to Claim 1, wherein on both surfaces of the elastic substrate, the adherend substrates are each bonded.

9. The silicone-rubber bonded object according to Claim 8, wherein each of the adherend substrates is made of a same or a different kind of material.

10. The silicone-rubber bonded object according to Claim 9, wherein a plurality of pairs of the elastic substrate and the adherend substrate are laminated.

11. A method for manufacturing a silicone-rubber bonded object comprising;
a lamination step for laminating a three-dimensional silicone rubber elastic substrate having hydroxyl groups on a surface thereof with an adherend substrate having hydroxyl groups on a surface thereof; and
a bond step for bonding the substrates to each other through covalent bonds formed between the hydroxyl groups of both at 0 to 200°C under a load treatment or a reduced pressure treatment.

12. The method for manufacturing a silicone-rubber bonded object according to Claim 11, wherein the bond step is carried out under a load treatment by giving a stress or under a reduced pressure treatment through a vacuum by deaeration by expelling any remaining air in a vacuum packing bag.

13. The method for manufacturing a silicone-rubber bonded object according to Claim 12, wherein further comprises;
an apply step for applying a the reactive-group containing polysiloxane, which is to be combined to both the hydroxyl groups of the three-dimensional silicone rubber elastic substrate and the hydroxyl groups of the adherend substrate, on the three-dimensional silicone rubber elastic substrate or the adherend substrate which is subjected to either of the corona discharge treatment or the plasma treatment, and then performing the lamination step.

## Patentansprüche

1. Geklebtes Silikonkautschukobjekt, umfassend:
ein dreidimensionales elastisches Substrat aus Silikonkautschuk mit Hydroxygruppen auf einer seiner Oberflächen, das mit einem adhärenden Substrat mit Hydroxygruppen auf einer seiner Oberflächen zusammenlaminiert ist;
wobei die Substrate durch kovalente Bindungen zwischen den Hydroxygruppen von beiden miteinander verbunden sind,
wobei die Hydroxygruppen des elastischen Substrats und die Hydroxygruppen des adhärenden Substrats durch die kovalenten Bindungen über ein reaktive Gruppen enthaltendes Polysiloxan, das mit den Hydroxygruppen sowohl des elastischen Substrats als auch des adhärenden Substrats verbunden ist, kombiniert sind und
das reaktive Gruppen enthaltende Polysiloxan, das im Vorhinein an die Hydroxygruppen des dreidimensionalen elastischen Substrats aus Silikonkautschuk gebunden wurde, durch die kovalenten Bindungen chemisch an die Hydroxygruppe des adhärenden Substrats gebunden wird
und das reaktive Gruppen enthaltende Polysiloxan umfasst:
p Repetiereinheit oder -einheiten von -{O-Si(-A¹)(-B¹)}-,
q Repetiereinheiten von -{O-Ti(-A²)(-B²)}- und
r Repetiereinheit oder -einheiten von -{O-Al(-A³)}-;
wobei in jeder Repetiereinheit p eine Zahl von 0 oder 2 bis 200 ist, q eine Zahl von 2 bis 200 ist, r eine Zahl von 0 oder 2 bis 100 ist und p+q+r > 2, jedes von -A¹, -A² und -A³ entweder eine Gruppe -CH₃, -C₂H₅, -CH=CH₂, -CH(CH₃)₂, -CH₂CH(CH₃)₂, -C(CH₃)₃, -C₆H₅ oder -C₆H₁₂ ist oder eine reaktive Gruppe für die Bildung der kovalenten Bindung aus der Gruppe ausgewählt ist, die aus -OCH₃, -OC₂H₅, -OCH=CH₂, -OCH(CH₃)₂, -OCH₂CH(CH₃)₂, -OC(CH₃)₃, -OC₆H₅ und -OC₆H₁₂ besteht, jedes von -B¹ und -B² entweder eine Gruppe -N(CH₃)COCH₃ oder -N(C₂H₅)COCH₃ ist oder eine reaktive Gruppe für die Bildung der kovalenten Bindung aus der Gruppe ausgewählt ist, die aus -OCH₃, -OC₂H₅, -OCH=CH₂, -OCH(CH₃)₂, -OCH₂CH(CH₃)₂, -OC(CH₃)₃, -OC₆H₅, -OC₆H₁₂, -OCOCH₃, -OCOCH(C₂H₅)C₄H₉, -OCOC₆H₅, -ON=C(CH₃)₂ und -OC(CH₃)=CH₂ besteht, und wenigstens eines der -A¹, -A², -A³, -B¹ und -B² in den Repetiereinheiten, die eine positive Zahl für p, q oder r aufweisen, die reaktive Gruppe ist,
und die Hydroxygruppen auf den Oberflächen durch eine Koronaentladungsbehandlung und/oder eine Plasmabehandlung über dem elastischen Substrat und/oder dem adhärenden Substrat gebildet werden.

2. Geklebtes Silikonkautschukobjekt gemäß Anspruch 1, wobei die kovalenten Bindungen Etherbindungen über das reaktive Gruppen enthaltende Polysiloxan sind.

3. Geklebtes Silikonkautschukobjekt gemäß Anspruch 1, wobei die Hydroxygruppen auf dem elastischen Substrat oder die Hydroxygruppen auf dem adhärenden Substrat durch Abspaltung eines Blockschutzes desselben gebildet werden.

4. Geklebtes Silikonkautschukobjekt gemäß Anspruch 1, wobei das adhärende Substrat aus Metall, Harz, Keramik oder vernetztem Kautschuk besteht.

5. Geklebtes Silikonkautschukobjekt gemäß Anspruch 4, wobei das dreidimensionale elastische Substrat aus Silikonkautschuk aus wenigstens einem aus einem Silikonkautschuk des Peroxid-Vernetzungstyps, einem Silikonkautschuk des Additionsvernetzungstyps, einem Silikonkautschuk des Kondensationsvernetzungstyps oder einem gemischten Kautschuk aus wenigstens einem dieser Kautschuke mit einem Olefinkautschuk besteht.

6. Geklebtes Silikonkautschukobjekt gemäß Anspruch 1, wobei die kovalenten Bindungen unter einer Belastungsbehandlung durch Ausüben einer Spannung oder einer Unterdruckbehandlung durch ein Vakuum durch Entlüftung durch Ausstoß der übrigen Luft in einem Vakuumverpackungsbeutel gebildet werden.

7. Geklebtes Silikonkautschukobjekt gemäß Anspruch 1, wobei das reaktive Gruppen enthaltende Polysiloxan eine Verbindung mit Blockcopolymerisation oder statistischer Copolymerisation der Repetiereinheiten ist.

8. Geklebtes Silikonkautschukobjekt gemäß Anspruch 1, wobei die adhärenden Substrate jeweils auf beide Flächen des elastischen Substrats geklebt sind.

9. Geklebtes Silikonkautschukobjekt gemäß Anspruch 8, wobei die adhärenden Substrate jeweils aus demselben oder aus unterschiedlichen Arten von Material bestehen.

10. Geklebtes Silikonkautschukobjekt gemäß Anspruch 9, wobei eine Vielzahl von Paaren aus dem elastischen Substrat und dem adhärenden Substrat zusammenlaminiert sind.

11. Verfahren zur Herstellung eines geklebten Silikonkautschukobjekts, umfassend:
einen Laminierungsschritt zum Laminieren eines dreidimensionalen elastischen Substrats aus Silikonkautschuk, das Hydroxygruppen auf einer seiner Oberflächen aufweist, mit einem adhärenden Substrat, das Hydroxygruppen auf einer seiner Oberflächen aufweist, und
einen Klebeschritt zum Miteinander-Verkleben der Substrate durch kovalente Bindungen, die zwischen den Hydroxygruppen von beiden gebildet sind, bei 0 bis 200 °C unter einer Belastungsbehandlung oder einer Unterdruckbehandlung.

12. Verfahren zur Herstellung eines geklebten Silikonkautschukobjekts gemäß Anspruch 11, wobei der Klebeschritt unter einer Belastungsbehandlung durch Ausüben einer Spannung oder einer Unterdruckbehandlung durch ein Vakuum durch Entlüftung durch Ausstoß der übrigen Luft in einem Vakuumverpackungsbeutel durchgeführt wird.

13. Verfahren zur Herstellung eines geklebten Silikonkautschukobjekts gemäß Anspruch 12, weiterhin umfassend:
einen Auftragungsschritt zum Auftragen des reaktive Gruppen enthaltenden Polysiloxans, das sowohl mit den Hydroxygruppen des dreidimensionalen elastischen Substrats aus Silikonkautschuk als auch den Hydroxygruppen des adhärenden Substrats kombiniert werden soll, auf das dreidimensionale elastische Substrat aus Silikonkautschuk oder das adhärende Substrat, das entweder der Koronaentladungsbehandlung oder der Plasmabehandlung unterzogen wird, und dann Durchführen des Laminierungsschritts.

## Revendications

1. Objet en caoutchouc de silicone collé, comprenant :
un substrat élastique en caoutchouc de silicone tridimensionnel ayant des groupes hydroxyle sur une de ses surfaces, laminé sur un substrat adhérant ayant des groupes hydroxyle sur une de ses surfaces,
les substrats étant reliés l'un à l'autre par des liaisons covalentes entre les groupes hydroxyle des deux,
dans lequel les groupes hydroxyle du substrat élastique et les groupes hydroxyle du substrat adhérant sont combinés par les liaisons covalentes par l'intermédiaire d'un polysiloxane contenant des groupes réactifs qui est relié aux groupes hydroxyle tant du substrat élastique que du substrat adhérant, et
le polysiloxane contenant des groupes réactifs, lié préalablement au groupe hydroxyle du substrat élastique en caoutchouc de silicone tridimensionnel, est lié chimiquement au groupe hydroxyle du substrat adhérant par les liaisons covalentes,
et le polysiloxane contenant des groupes réactifs comprend :
p motif répétitif ou motifs répétitifs de -{O-Si(-A¹)(-B¹)}-,
q motifs répétitifs de -{O-Ti(-A²)(-B²)}-, et
r motif répétitif ou motifs répétitifs de -{O-Al(-A³)}-,
où dans chaque motif répétitif, p est un nombre de 0 ou 2 à 200, q est un nombre de 2 à 200, r est un nombre de 0 ou 2 à 100, et p+q+r > 2, -A¹, -A² et -A³ sont chacun soit un groupe -CH₃, -C₂H₅, -CH=CH₂, -CH(CH₃)₂, -CH₂CH(CH₃)₂, -C(CH₃)₃, -C₆H₅ ou -C₆H₁₂, soit un groupe réactif pour former la liaison covalente étant choisi dans le groupe consistant en -OCH₃, -OC₂H₅, -OCH=CH₂, -OCH(CH₃)₂, -OCH₂CH(CH₃)₂, -OC(CH₃)₃, -OC₆H₅ et -OC₆H₁₂, -B¹ et -B² sont chacun soit un groupe -N(CH₃)COCH₃ ou -N(C₂H₅)COCH₃, soit un groupe réactif pour former la liaison covalente étant choisi dans le groupe consistant en -OCH₃, -OC₂H₅, -OCH=CH₂, -OCH(CH₃)₂, -OCH₂CH(CH₃)₂, -OC(CH₃)₃, -OC₆H₅, -OC₆H₁₂, -OCOCH₃, -OCOCH(C₂H₅)C₄H₉, -OCOC₆H₅, -ON=C(CH₃)₂ et -OC(CH₃)=CH₂, et au moins un parmi -A¹, -A², -A³, -B¹ et -B² dans les motifs répétitifs ayant un nombre positif de p, q ou r est le groupe réactif,
et les groupes hydroxyle sont formés sur les surfaces par un traitement par décharge à effet couronne et/ou un traitement au plasma sur le substrat élastique et/ou le substrat adhérant.

2. Objet en caoutchouc de silicone collé selon la revendication 1, dans lequel les liaisons covalentes sont des liaison éther par l'intermédiaire du polysiloxane contenant des groupes réactifs.

3. Objet en caoutchouc de silicone collé selon la revendication 1, dans lequel les groupes hydroxyle sur le substrat élastique ou les groupes hydroxyle sur le substrat adhérant sont formés par clivage d'une protection par blocage de celui-ci.

4. Objet en caoutchouc de silicone collé selon la revendication 1, dans lequel le substrat adhérant est en métal, résine, céramique ou caoutchouc réticulé.

5. Objet en caoutchouc de silicone collé selon la revendication 4, dans lequel le substrat élastique en caoutchouc de silicone tridimensionnel est en au moins un parmi un caoutchouc de silicone de type réticulation peroxyde, un caoutchouc de silicone de type réticulation par addition, un caoutchouc de silicone de type réticulation par condensation, ou un caoutchouc mélangé d'au moins un parmi lesdits caoutchoucs de silicone avec un caoutchouc d'oléfine.

6. Objet en caoutchouc de silicone collé selon la revendication 1, dans lequel les liaisons covalentes sont formées pendant un traitement de charge par application d'une tension, ou pendant un traitement de pression réduite par l'intermédiaire d'un vide par désaération en expulsant l'air résiduel dans un sac d'emballage sous vide.

7. Objet en caoutchouc de silicone collé selon la revendication 1, dans lequel le polysiloxane contenant des groupes réactifs est un composé de copolymérisation en bloc ou de copolymérisation aléatoire des motifs répétitifs.

8. Objet en caoutchouc de silicone collé selon la revendication 1, dans lequel les substrats adhérants sont chacun liés sur les deux surfaces du substrat élastique.

9. Objet en caoutchouc de silicone collé selon la revendication 8, dans lequel chaque substrat adhérant est en la même ou en une différente espèce de matériau.

10. Objet en caoutchouc de silicone collé selon la revendication 9, dans lequel une pluralité de paires du substrat élastique et du substrat adhérant sont laminées.

11. Procédé pour fabriquer un objet en caoutchouc de silicone collé, comprenant :
une étape de laminage pour laminer un substrat élastique en caoutchouc de silicone tridimensionnel ayant des groupes hydroxyle sur une de ses surfaces avec un substrat adhérant ayant des groupes hydroxyle sur une de ses surfaces, et
une étape de liaison pour lier les substrats l'un à l'autre par des liaisons covalentes formées entre des groupes hydroxyle des deux à 0 à 200 °C pendant un traitement de charge ou pendant un traitement de pression réduite.

12. Procédé pour fabriquer un objet en caoutchouc de silicone collé selon la revendication 11, dans lequel ladite étape de liaison est effectuée pendant un traitement de charge par application d'une tension, ou pendant un traitement de pression réduite par l'intermédiaire d'un vide par désaération en expulsant l'air résiduel dans un sac d'emballage sous vide.

13. Procédé pour fabriquer un objet en caoutchouc de silicone collé selon la revendication 12, comprenant en outre :
une étape d'application pour appliquer le polysiloxane contenant des groupes réactifs à combiner avec tant les groupes hydroxyle du substrat élastique en caoutchouc de silicone tridimensionnel que les groupes hydroxyle du substrat adhérant, au substrat élastique en caoutchouc de silicone tridimensionnel ou au substrat adhérant, qui est soumet soit au traitement par décharge à effet couronne ou au traitement au plasma, et ensuite l'étape de laminage est effectuée.
